(19)

Europäisches
Patentamt
European
Patent Office
Office européen
des brevets

(11) **EP 1 879 139 A1**

(12) **EUROPEAN PATENT APPLICATION**

(43) Date of publication:
**16.01.2008 Bulletin 2008/03**

(51) Int Cl.:
*G06Q 30/00* (2006.01)

(21) Application number: **07011128.1**

(22) Date of filing: **06.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **09.06.2006 US 812404 P**
**10.11.2006 US 595702**

(71) Applicant: **SAP AG**
**69190 Walldorf (DE)**

(72) Inventors:
• **Lemcke, Jens**
**76131 Karlsruhe (DE)**
• **Drumm Christian**
**76131 Karlsruhe (DE)**
• **Oberle Daniel**
**76448 Durmersheim (DE)**

(74) Representative: **Lehmann, Judith Christina**
**Hössle Kudlek & Partner**
**Patentanwälte**
**Postfach 10 23 38**
**70019 Stuttgart (DE)**

(54) **Method and system for generating collaborative process**

(57)    A system (100) is described that may generate collaborative processes (650, 2410), for example, for business partners (2002, 2004, 2102, 2104). The system (100) may include a lifting engine (104) configured to receive (302) public specifications (1102, 1106) describing a first proprietary process and second proprietary process (502, 532, 630). The lifting engine (104) may determine (304) an alignment (110, 1320, 1420) between the public specifications (1102, 1106) and corresponding elements (1202, 1204, 1206, 1208, 1210) of an ontology domain (112). The system (100) may further include a mapping engine (118) configured to determine (306, 2404) one or more mapping expressions (1502, 1602) associated with the first proprietary process and second proprietary process (502, 532, 630) based on the determined alignment (1320, 1420). A composition engine (116) may be configured to generate (308, 2408) a collaborative process (650, 2410) based on the one or more mapping expressions (1502, 1602).

FIG. 1

EP 1 879 139 A1

**Description**

**Cross Reference to Related Applications**

This application claims priority to U.S. Provisional Application Serial No. 60/812,404, filed on June 9, 2006, entitled "Method and System for Generating Collaborative Processes," and to U.S. Application Serial No. 11/595,702, filed on November 10, 2006, entitled "Method and System for Generating Collaborative Processes," both of which are hereby incorporated by reference herein.

**Technical Field**

This description relates to process management technologies.

**Background**

Keeping track with increasingly dynamic markets has become a challenge with respect to business tasks in today's companies. A constantly changing business environment demands that companies become more flexible to adapt to changing market requirements. The demand for flexibility in markets may result, for example, in a need for high adaptability of internal company IT structures, and simplification of interoperation with business partners, as well as support for integration and outsourcing of business units. In order to provide support for these market requirements, providers of software systems may develop integrative platforms for individual service providers and requesters.
Such an integrative platform may provide, for example, a uniform means for companies to represent the interfaces of their business functionality, for example, by Enterprise Services which may be based on the Web Service Description Language (WSDL) standard, which includes an eXtensible Markup Language (XML) format, for example, an XML schema definition language (XSD) format, published for describing web services. WSDL may be used to describe a public interface to a web service. The public interface may include an XML- based service description on how to communicate using the web service; for example, the protocol bindings and message formats required to interact with the web services listed in its directory. The supported operations and messages may be described abstractly, and then may be bound to a concrete network protocol and message format.
Enterprise Services may extend Web Services by providing business level functionality that is also concerned explicitly with aspects such as scalability, security, and transactions etc., which may be important in an industrial setting. For example, a task such as canceling an order in a real world scenario may have subsequent consequences, which may need to be handled as well.
For example, in many business settings, an order may not be simply deleted in a database, as the cancellation may involve a complex business process. For example, an order cancellation may raise questions such as, for example, whether roll-back of the order in a backend system is possible and whether manual steps in the roll-back process may be necessary. Other questions which may arise may involve, for example, determining which roles may be involved in the order, determining whether notification may need to be sent through other Enterprise Services such as logistic services, loan services, etc. For example, if the order involved loan services, an approval process may need to be terminated and a cancellation fee may need to be charged. With Enterprise Services this related business information may be made explicit.
An example order-to-cash process used by many businesses may involve at least three parties: i) a customer, ii) a shipper, and iii) a carrier. In an example scenario, the customer may place an order with a shipper, for example, the customer may place an order for a book. The shipper may enter the order information in the shipper's business management system. The shipper may then perform certain operations for delivery and picking and packing. Shipping information, for example, the ship- from address and the ship-to address, may be used for labeling the goods, e.g., the book, and a manifest may be generated and sent to a carrier for delivery to the destination, or ship-to address. This may trigger the actual shipping by the carrier, which may then be tracked by a shipping process of the shipper.
A billing process may be used by the carrier and the shipper to ensure correct payment for goods and services for both parties. However, carriers may change their conditions of service over time, and shippers may need to be notified of such changes. In order for new contractual cooperative activity between the carrier and the shipper to succeed, the new conditions of service may need to be manually input into the shipper's business system. Also, shippers may add or update services, which may lead to a need for a carrier to manually update the carrier's business system to reflect the shippers' current services. Moreover, if a shipper decides to change carriers, the shipper may need to manually change processes in the shipper's business system. Thus, business process interactions between the business partners may become tedious and expensive to maintain, or may not be maintained in a sufficiently accurate or timely manner.

**EP 1 879 139 A1**

## Summary

According to one general aspect, a method includes receiving public specifications describing two or more proprietary processes, wherein the public specifications include a description language format description of operations associated with each of the proprietary processes and a process format description of constraints associated with each of the operations. The method further includes generating a collaborative process based on combining the received public specifications based on the description language format description, the process format description, and ontologies included in domain ontology storage.

According to another aspect, a system includes a lifting engine configured to receive public specifications describing a first proprietary process and second proprietary process and to determine an alignment between the public specifications and corresponding elements of an ontology domain. The system further includes a mapping engine configured to determine one or more mapping expressions associated with the first proprietary process and second proprietary process based on the determined alignment. The system further includes a composition engine configured to generate a collaborative process based on the one or more mapping expressions.

According to yet another aspect, a method includes receiving, by a lifting engine, public specifications describing two or more proprietary processes, wherein the public specifications include descriptions of operations associated with the two or more proprietary processes and descriptions of constraints associated with the operations. The method further includes aligning, by the lifting engine, the received public specifications. Further, the method includes mapping, by a mapping engine, the aligned public specifications to one or more mapping expressions based on representations of ontologies included in domain ontology storage. The method also includes generating, by a composition engine, a collaborative process based on the one or more mapping expressions.

The details of one or more implementations are set forth in the accompanying drawings and the description below. Other features will be apparent from the description and drawings, and from the claims.

## Brief description of the Drawings

In the drawings,

Figure 1 is a block diagram of a system for generating collaborative processes.

Figure 2 is a flowchart illustrating an operation of the system of Figure 1.

Figure 3 is a flowchart illustrating an operation of the system of Figure 1.

Figure 4a is a block diagram illustrating an example flow through the example system of Figure 1.

Figure 4b illustrates an example flow of design-time process modeling and run-time execution of example processes by example business systems.

Figure 4c illustrates a graphical view of example operations of example processes for an example process execution engine.

Figure 5 illustrates example operations of public and private processes of two partners.

Figure 6 is a block diagram illustrating example operations of example public processes.

Figure 7 is a block diagram illustrating example operations of example public processes.

Figure 8 is a block diagram illustrating example operations of example public processes.

Figure 9 is a block diagram illustrating example operations of example public processes.

Figure 10 is a block diagram illustrating example operations of example public processes.

Figure 11 illustrates example extensible Markup Language (XML) schemas associated with two example parties.

Figure 12 illustrates example relationships between the two example parties of Figure 1.

Figure 13 illustrates an example alignment of an example XML schema to an example ontology element for a first example party.

Figure 14 illustrates an example alignment of an example XML schema to an example ontology element for a second example party.

Figure 15 illustrates an example mapping of example XML schemas for the first and second example parties of Figures 11-14.

Figure 16 illustrates an example mapping of example XML schemas for the first and second example parties of Figures 11-14.

Figures 17a - 17d illustrate example relationships of data elements included in an example message format associated with an example process associated with an example party A.

Figures 18a - 18b illustrate example relationships of data elements included in an example message format associated with an example process associated with an example party B.

Figure 19 illustrates an example conversion of the example message format associated with the example party A of Figure 17 to the example message format associated with the example party B of Figure 18.

Figure 20 is a block diagram of an example business process.

Figure 21 is a block diagram illustrating an example scenario of interaction of processes associated with an example shipper and an example carrier.

Figure 22 is a block diagram illustrating an example scenario of interaction of processes associated with an example shipper and an example carrier.

Figure 23 is a block diagram illustrating an example scenario of interaction of processes associated with an example shipper and an example carrier.

Figure 24 is a block diagram illustrating an example flow through an example system for generating collaborative processes.

## Detailed Description

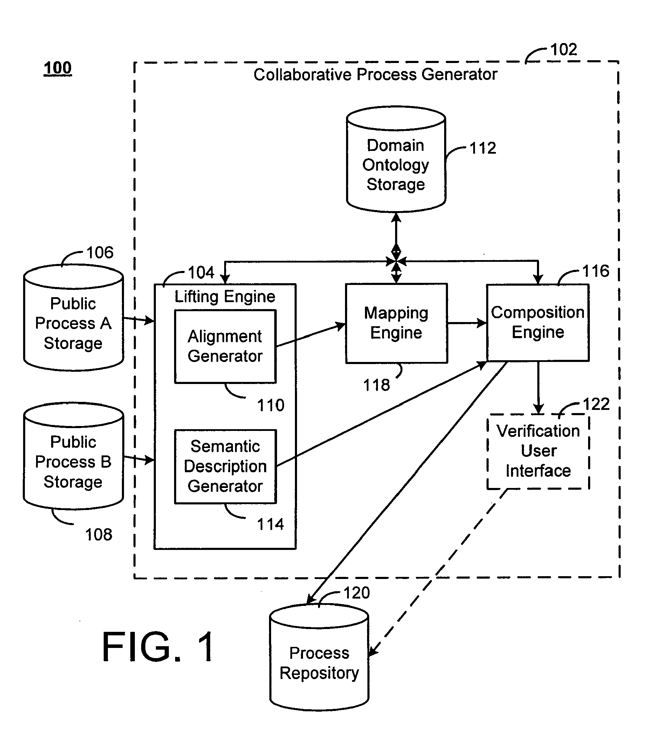

Figure 1 is a block diagram of a system 100 for generating collaborative processes. In the example of Figure 1, a collaborative process generator 102 includes various processing engines that provide collaborative processes that may be executed, for example, to achieve integrated or collaborative services, e.g., integrated or collaborative business services for business partners. Although the following description refers primarily to the collaborative process generator 102 as an example implementation, it should be understood that such collaborative process generators may refer to any type of process generator that combines services of two or more processes to provide an integrated or collaborative service for execution.

In Figure 1, the collaborative process generator 102 is illustrated as including a lifting engine 104 that receives input from a "public process A" storage device 106 and a "public process B" storage device 108. In the example of Figure 1, it may be the case that partners, for example, partners A and B interacting during a business process, may prefer to make only specific parts of their respective internal processes visible to external parties (e.g., the other partner). For example, one or both of partners A and B may use proprietary processes that may be configured differently from the other partner's processes. Thus, one or more of the partners may prefer to establish private and public processes, wherein a private process may include a detailed, internal process of a partner. As an example, a partner may prefer to keep certain aspects of its internal processes as trade secrets, and thus may prefer to keep the details of the private process a secret from parties external to the partner's endeavors.

Based on the internal, or private process, a view, which may be referred to as a public process, may be created. The public process may conceal confidential process details and may expose only process steps that may be required for an interaction. For example, a private process A for accepting customer orders for goods of a shipper may be associated with a public process A that includes process steps for receiving the customer order and completing the order. A related private process B for a carrier may be associated with a public process B that includes process steps of selecting a shipping condition and calculating a rate for shipping an item. The public process(es) may be used by partners, for example, business partners A and B, to create a new process that may be referred to as a collaborative process, e.g., a Collaborative Business Process (CBP) that may involve both internal and external services, as discussed further below. In the example shown in Figure 1, the public processes of two partners A and B may be formatted using a description language format description of operations and a process format description of constraints associated with each of the operations, and may be stored in the "public process A" storage device 106 and "public process B" storage device 108. For example, the operations of the public processes may be represented as Web service operations included in Web Service Description Language (WSDL) files. The representations of the two public processes may include the process flow and XML schema definitions (XSDs) of the input and output messages associated with each process step. These representations may then be available as inputs to the lifting engine 104. The lifting engine 104 may be utilized, for example, to "lift" existing information, for example, XML-based information, to an ontological level for processing with semantic approaches such as Semantic Web Services approaches.

A WSDL file may be regarded as a type of extensible Markup Language (XML) file. For example, a WSDL file may include a set of operation definitions, and the WSDL file may be referred to as a Web service description. Thus, one operation of a WSDL file may be referred to as a "Web service operation," a "WSDL operation," or an "operation." Such an operation may include, for example, an input message, an output message, or an input and an output message. A WSDL file may include the message definitions, which may be represented, for example, as XSDs, or XML schemas. The processes may be represented, for example, in a workflow description language format, for example, in a proprietary format or Web Services Business Process Execution Language (WSBPEL). The process descriptions may include workflow constructs (e.g., sequence, decision, fork, merge, join) and process steps. Thus, a process step may be connected to a WSDL operation such that the inputs and outputs of the process step may include the inputs and outputs as defined for the connected Web service.

The lifting engine 104 may include an alignment generator 110 that may be configured to generate an alignment of input and output messages of operations of public processes with ontologies stored in a domain ontology storage 112. The lifting engine 104 may also include a semantic description generator 114 that may be configured to generate a semantic description of input public processes. For example, the WSDL operations and process specifications may be converted to a semantic web service format. The alignment generator 110 may be configured to receive, for example, representations of input and output messages of operations of public processes for a partner A and a partner B. These representations may, for example, include representations in the format of extensible Markup Language (XML) schemas, for example, XSD elements. The alignment generator 110 may further access the domain ontology storage device 112 to obtain ontologies for determining an alignment of the received input and output messages with appropriate ontologies. Generally, an ontology may be viewed as a means of classifying certain concepts. For example, an ontology may provide an account of which words refer to entities, which do not, why, and what categories result.

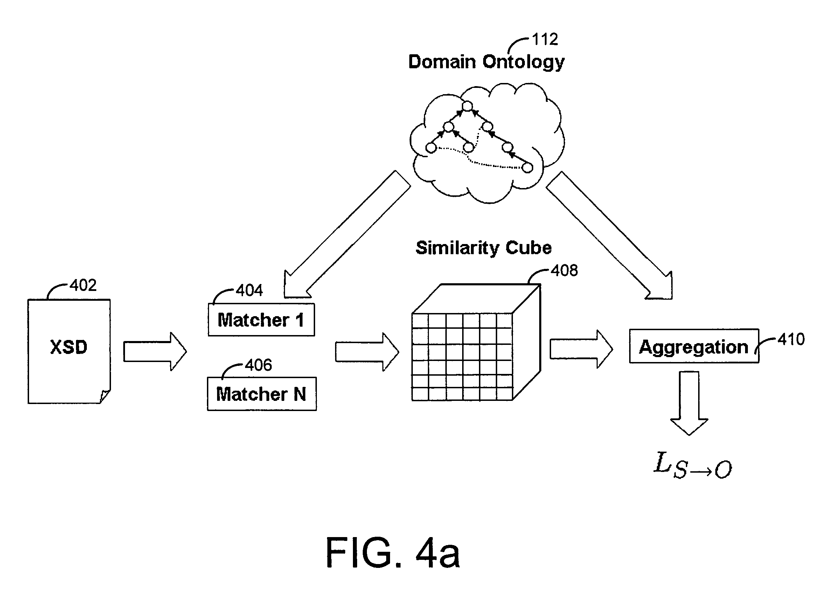

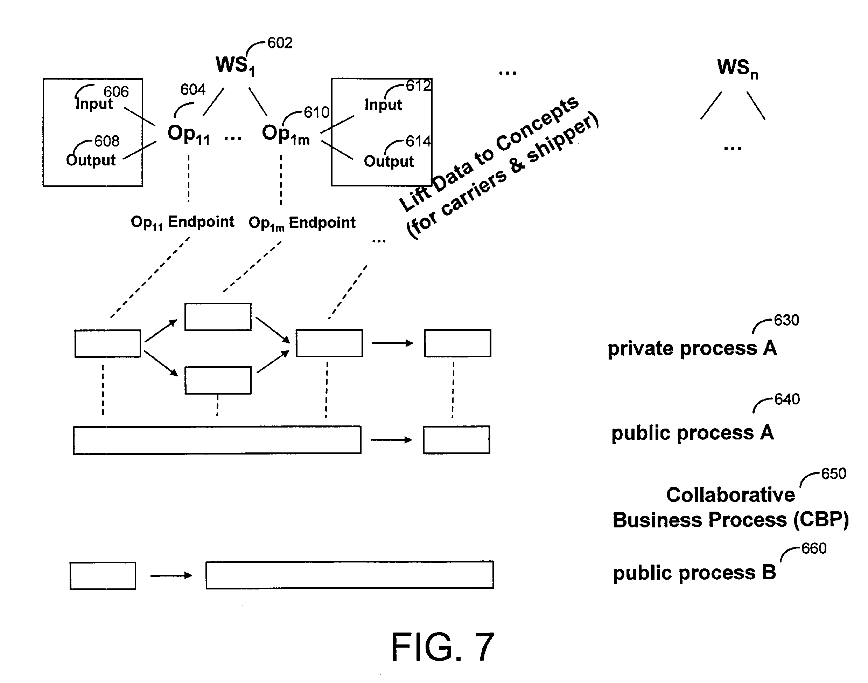

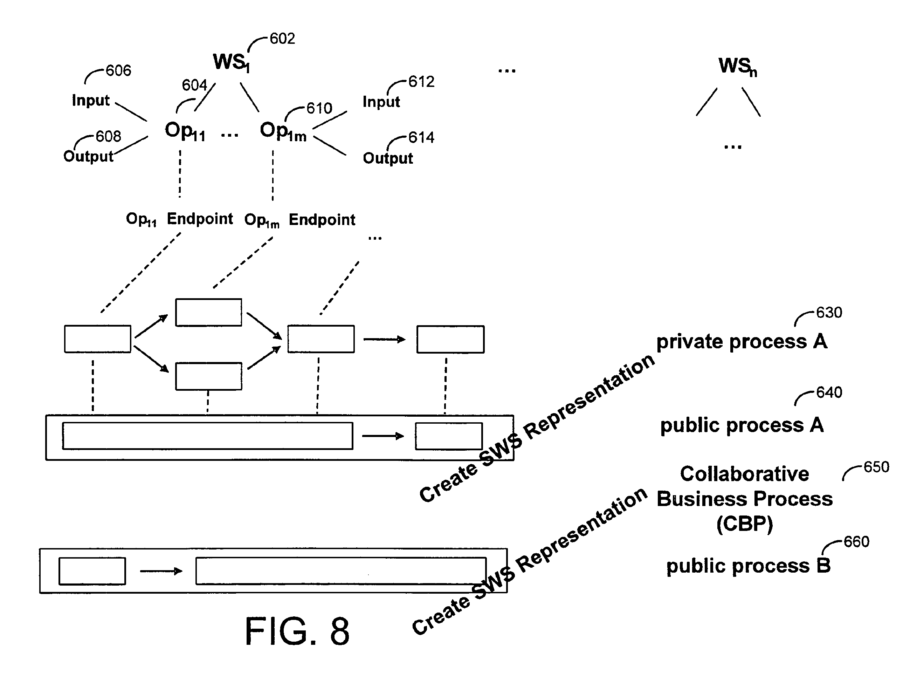

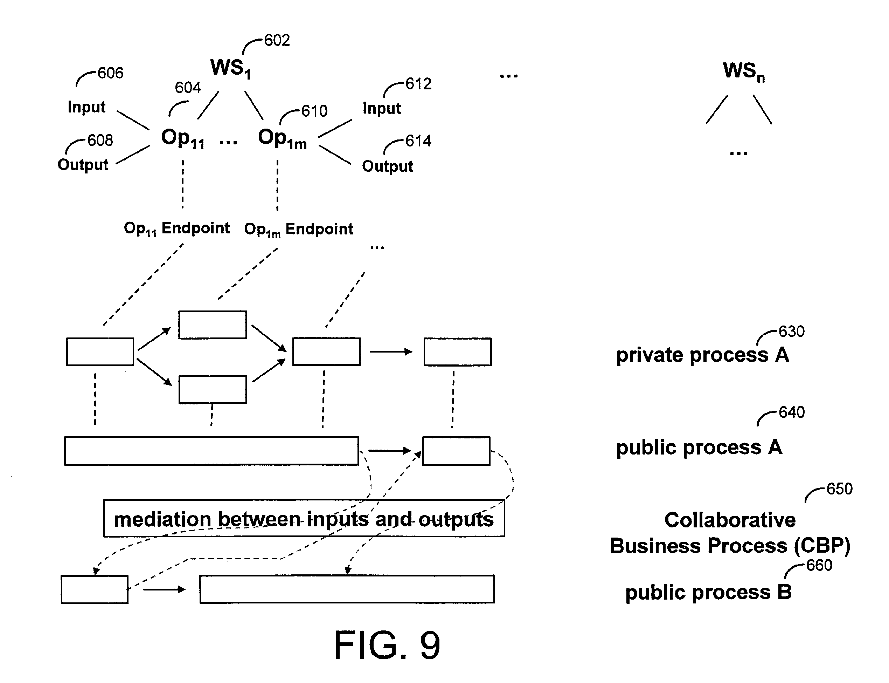

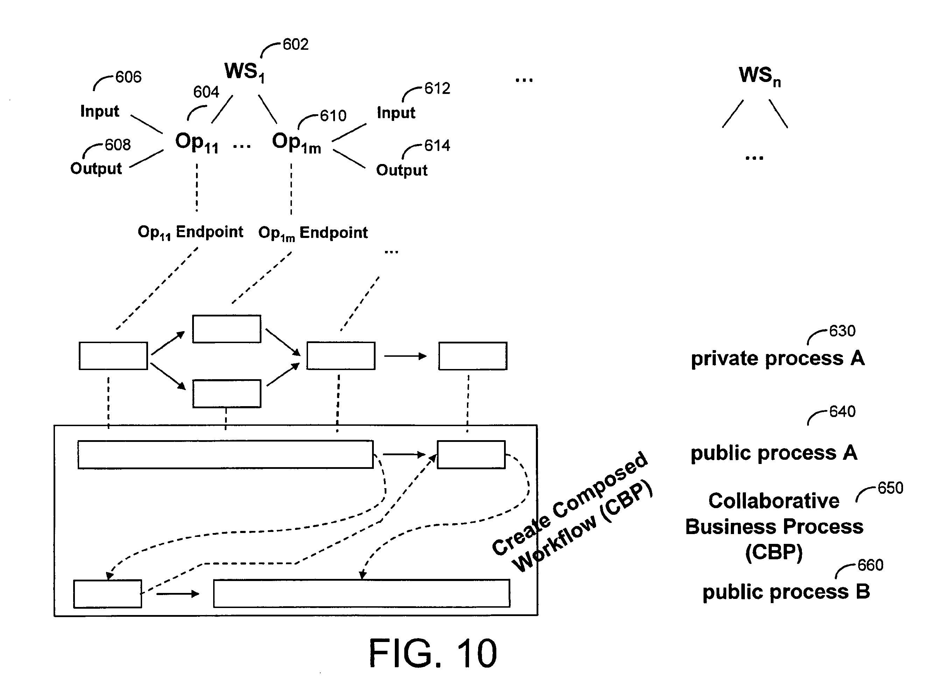

For the example of Figure 1, the alignment generator 110 may analyze the inputs and outputs of each of the received public process steps for the partners A and B. In order to generate an alignment, the alignment generator 110 may, for example, execute a set of elementary matching algorithms. According to an example embodiment, an example matching algorithm may analyze the information available in the XML schema(s) and the ontologies (e.g., element and concept names such as "purchase order") to create an example similarity matrix. The example similarity matrix may associate each pair of XML schema and ontology entities with a similarity value. An alignment between the XML schema and the domain ontology may then be calculated based on the similarity matrix, as discussed further below, and as illustrated, for example, in Figures 4a and 6-14.

The semantic description generator 114 may, for example, convert the original public process representation to a semantic format. Such a semantic format may then be input to a composition engine 116 for generation of a collaborative process.

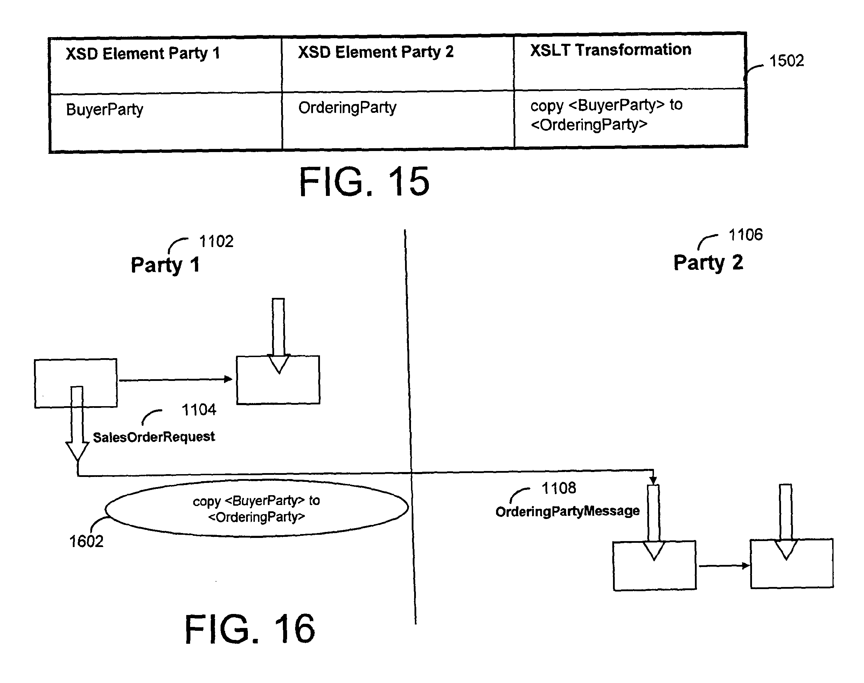

A mapping engine 118 may be configured to generate a list of possible executable mappings between XML schemas, for example, based on the alignments between the ontologies and the XML schemas. For example, for each alignment the mapping engine 118 may search for other alignments that relate schema entities to equivalent ontology entities, based on the alignments and the ontologies included in the domain ontology storage 112. If such entities are determined, a new mapping expression may be generated for determining how schema entities may be related. The new mapping expression may then be added to the mappings, as discussed further below and as illustrated, for example, in Figures 15-16. According to an example embodiment, mappings may be generated between input schemas of one public process and output schemas of the other and vice versa, and not between each pair of schemas.

The mappings generated by the mapping engine 118 and the semantic descriptions generated by the semantic description generator 114 may be received by a composition engine 116 that may be configured to generate the collaborative process based on the received mappings and semantic descriptions. Thus, the mapping engine 118 and the lifting engine 104 may be considered to combine the specifications of the public processes input from public process A and B storage 106, 108. The composition engine 116 may, for example, compare the inputs and outputs that are defined as ontology concepts in two behavior descriptions and connect them where possible. In determining whether a connection is possible, the composition engine 116 may, for example, rely on the results from the alignment generator 110. The alignment generator 110 may be configured to generate alignments that may connect those XML schema elements that may later be used to generate a mapping to the same ontology element.

Thus, the composition engine 116 may be configured, for example, to search for equivalent concepts in two behavior descriptions that may be connected. After identifying matching concepts, the composition engine 116 may connect fitting edges, for example, by a transformation activity node that may define a conversion which potentially may need to be performed in the real-time execution of the combined process. This conversion may be represented, for example, by a mapping function that may define a transformation of actual data corresponding to the XML schema of a sender to a message corresponding to a receiver's format as discussed further below. A result of the composition may include, for example, a business process that includes process steps of both parties A and B, their interconnections via mapping activities, and those inputs and outputs that could not be interconnected. The composition may be considered successful when, for each party or partner, there are no inputs and outputs left that could not be connected to corresponding communications of the other party or partner.

The resulting collaborative process may be stored in a process repository 120 so that, during run-time a business process engine (not shown) may retrieve the process from the process repository 120 and execute an instance of the process, for example, for each incoming sales order. It should be understood that the process repository 120 may be located in a location other than internal to the collaborative process generator 102, or may be located with copies in multiple locations.

According to an example embodiment, the collaborative process(es) generated by the composition engine 116 may be sent to a verification user interface 122 that may be configured to present the collaborative process(es) to a user of the verification user interface 122. For example, the user may check the collaborative process and, for example, may modify the collaborative process before the collaborative process is stored in the process repository 120.

As a result of the above-described example techniques, example collaborative processes may be generated that may provide flexibility to partners, for example business partners having business processes that may benefit from interactions with each other. As discussed previously, Figure 1 depicts an example architecture for generating such example collaborative processes, where the example architecture of Figure 1 may be used, for example, for i) generation of message mappings and ii) integration of the public processes of different partners into one (or more) collaborative business process(es) (CBPs). Further, the example architecture of Figure 1 may be used, for example, for flexible service selection during run-time.

It should be understood that the above description is merely intended to provide examples of a collaborative process generator, and that one skilled in the art will appreciate that there are many other examples of scenarios suitable for collaborative processes, and many other ways of implementing the concepts described herein, without departing from the spirit of the description provided herein.

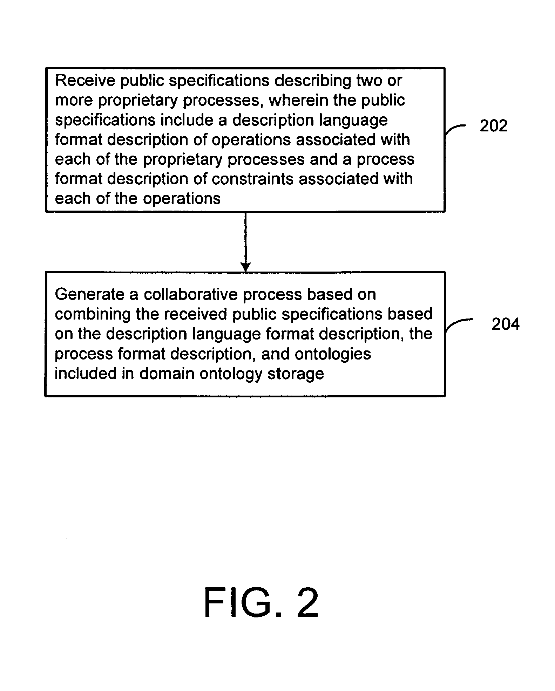

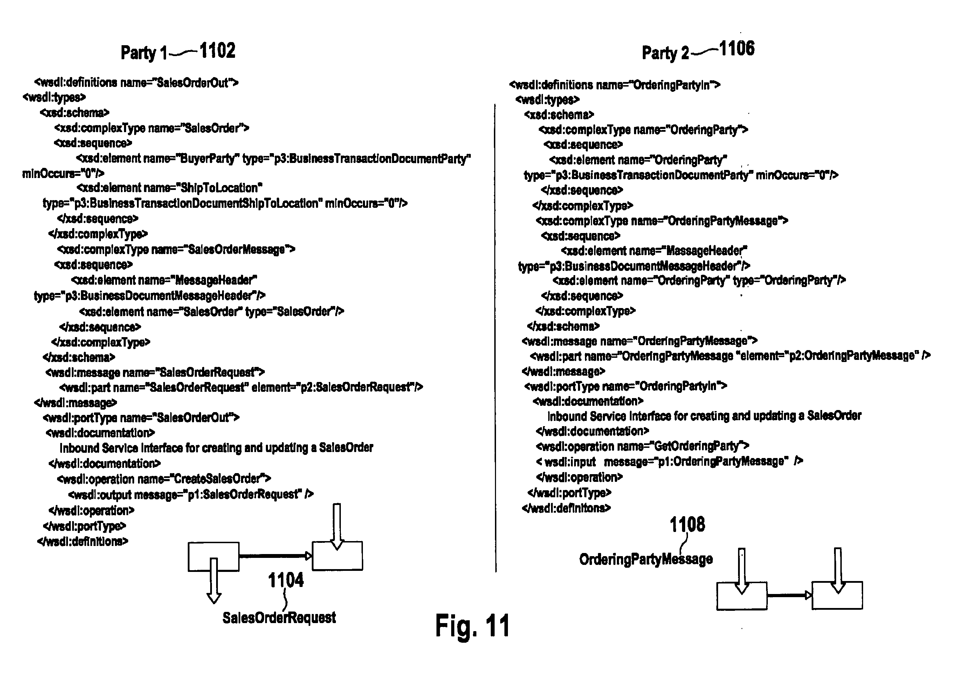

Figure 2 is a flowchart illustrating an example operation of the system of Figure 1. At 202, public specifications may be received, for example, by the lifting engine 104 of Figure 1. The received public specifications (e.g., specifications for public process A and public process B) may describe two or more proprietary processes, wherein the public specifications include a description language format description of operations associated with each of the proprietary processes and a process format description of constraints associated with each of the operations. For example, the public specifications may include example WSDL operations associated with process flow representations, as discussed previously, and as shown below at least in the example of Figure 11.

At 204, a collaborative process may be generated based on combining the received public specifications based on the description language format description, the process format description, and ontologies included in domain ontology storage. For example, the received public specifications may be lifted by the lifting engine 104 and the mapping engine 118 may generate the mappings between the XML schemas and the ontologies of the domain ontology storage 112, and the semantic process descriptions may be generated by the semantic description generator 114 as discussed previously with regard to Figure 1.

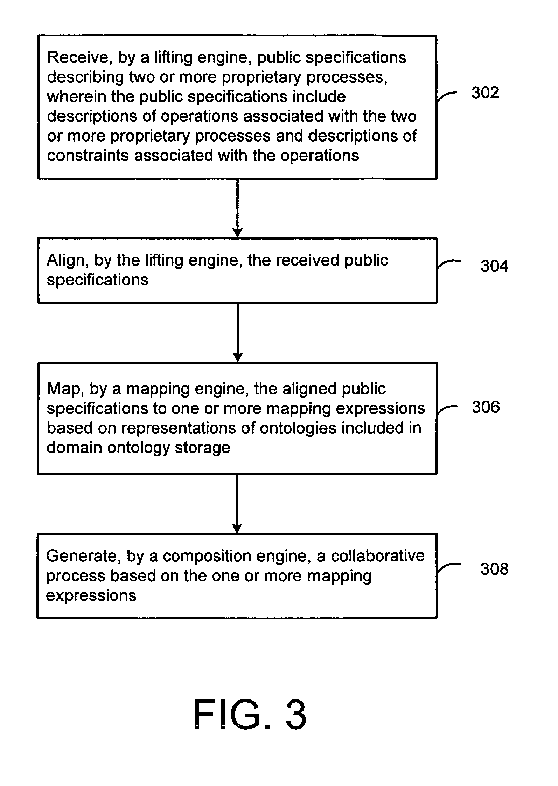

Figure 3 is a flowchart illustrating an example operation of the system of Figure 1. At 302, public specifications may be received, for example, by the lifting engine 104 of Figure 1. The received public specifications (e.g., specifications for public process A and public process B) may describe two or more proprietary processes, wherein the public specifications include descriptions of operations associated with the two or more proprietary processes and descriptions of constraints associated with the operations.

At 304, the received public specifications may be aligned by the lifting engine. For example, the received public specifications may be aligned by the lifting engine 104 of Figure 1.

At 306, the aligned public specifications may be mapped by a mapping engine to one or more mapping expressions based on representations of ontologies included in domain ontology storage. For example, the public specifications aligned by the lifting engine 104 may be mapped by the mapping engine 118 to one or more mapping expressions based on representations of ontologies included in the domain ontology storage 112 of Figure 1.

At 308, a collaborative process may be generated by a composition engine based on the one or more mapping expressions. For example, the composition engine 116 may generate the collaborative process based on the one or more mapping expressions. For example, the received public specifications may be lifted by the lifting engine 104 and the mapping engine 118 may generate the mappings between the XML schemas and the ontologies of the domain ontology storage 112, and the semantic process descriptions may be generated by the semantic description generator 114 as discussed previously with regard to Figure 1.

As discussed previously, according to an example embodiment, the composition engine 116 may generate the collaborative process based on mappings generated by the mapping engine 118 and semantic descriptions generated by the semantic description generator 114. According to an example embodiment, the collaborative process may be verified or edited by a user of the verification user interface 122, and the resulting collaborative process may be stored, for example, in the process repository 120. The processes stored in the process repository 120 may then be available, for example, for execution.

In order to understand potential benefits of the example collaborative process generator, it may be noted that an example carrier operating without such collaborative processes may experience the following:

1) Publication of new services may be difficult, because a process with an individual carrier may be hard-coded in the specific system configuration of the shipper. Thus, manual development may be needed to implement new services.

2) The example carrier may need to interact with a shipper in order to notify customers of service updates. If a change of service implies an adoption of a new process between both partners, each of the partners may need to manually develop the new service via each party's specific system configuration.

3) Message mappings may be needed in order to connect a third party system to a proprietary system generally. In addition, custom development may be needed to adapt a business process of the carrier to fit the framework of the proprietary system.

Without collaborative processes, an example shipper may experience the following:

1) Adding or updating services may be difficult because the process with an individual shipper may be firmly implemented in the specific system configuration of the carrier. Therefore manual development may be needed to implement new services.

2) If one or more processes are hard-coded into a shipper's proprietary system, a change from an existing carrier with an already implemented process to a new business partner (e.g., a new carrier) may be difficult and expensive due to the costs of updating the system.

3) If different service interfaces are provided by different carriers, a setup of a process with the different carriers may always involve new expense and effort, because little knowledge of one interface may be reused.

4) Comparisons of services provided by carriers may be difficult and time-consuming due to a diversity of interfaces and properties, such as a pricing model, for example, of the services provided by the carriers.

The example collaborative process generator 102 of Figure 1 may thus provide approaches to solutions of these and other problems that may be faced, for example, by carriers and shippers.

Figure 4a is a block diagram illustrating an example flow through the example system of Figure 1. An XML schema definition (XSD) 402 is input to matchers 404, 406, which may analyze the information available in the XML schema(s) and the ontologies (e.g., element and concept names such as "purchase order") of the domain ontology 112 to generate an example similarity matrix or similarity cube 408. The example similarity matrix or similarity cube 408 may associate each pair of XML schema and ontology entities with a similarity value. An alignment between the XML schema and the domain ontology, or aggregation 410, may then be calculated based on the similarity matrix 408.

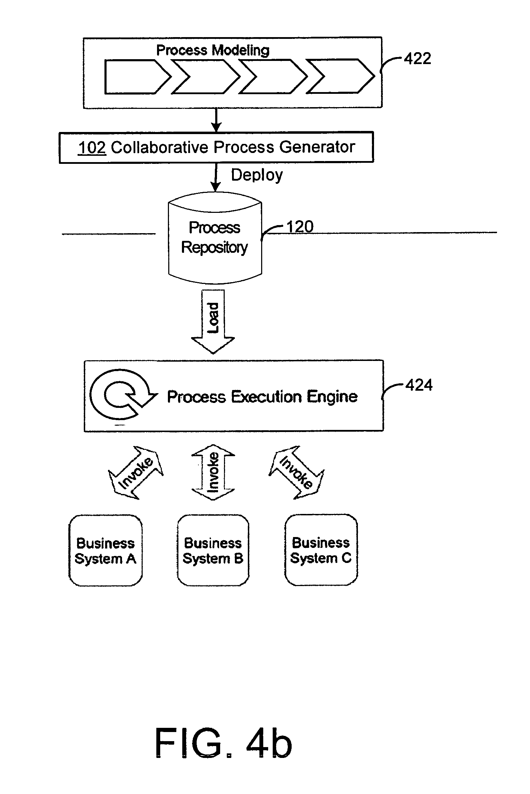

Figure 4b illustrates a high-level description of an example implementation of a scenario of two or more business partners that may be able to interact by generating collaborative processes, using, e.g., the collaborative process generator 102 of Figure 1. The example implementation shown in Figure 4b includes three main components: i) a process modeling tool 422 configured to model processes, ii) the collaborative process generator 102, and iii) a process execution engine 424 configured to execute modeled processes.

Focusing on an example shipper, an example executable process may be generated. Using the process modeling tool 422, a domain expert may create a graphical representation of the process executed at the shipper whenever a new sales order is processed. This graphical representation may at first not be linked to any of the shipper's business systems or any carrier services. Therefore, the single process steps of the business process may be connected to services offered by either the internal or the partner business systems.

Connecting different services and systems may involve constructing a mapping between different message formats. Thus, the mappings may be created, converting between the input and output messages of the different business systems involved. The collaborative process generator 102 may combine the processes of the shipper and carrier. After the business process has been modeled and the involved business systems have been connected to the different process steps, the business process may be stored into the process repository 120 as shown in Figure 4b. During run-time the process execution engine 424 may retrieve the process from the process repository and execute an instance of the process for each incoming sales order.

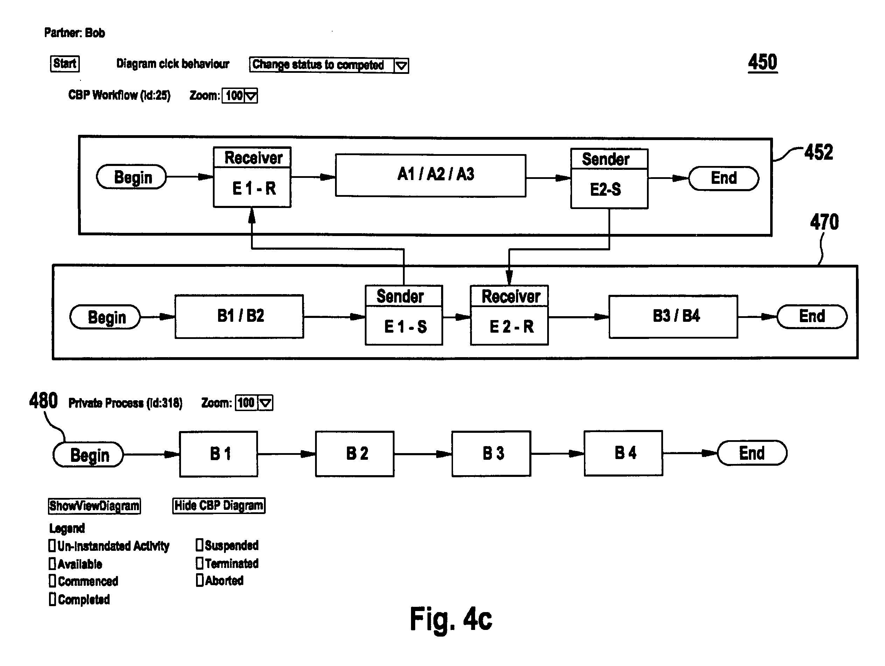

Figure 4c is a screen shot 450 of a graphical user interface associated with an example process execution engine 424 of Figure 4b. The example process execution engine 424 may include a workflow runtime engine configured to execute modeled business processes. An example process representation may be based on Scalable Vector Graphics (SVG). As shown in Figure 4c, a block 452 shows a process flow for CBP process steps A1, A2, and A3 for a first party. A block 470 shows a process flow for CBP process steps B1, B2, B3, and B4 for a second party. A block 480 shows a process flow of the process steps B1, B2, B3, and B4 as private processes of the second party.

As shown the representation also shows an output of a sender (E1-S) mapped to an input of a receiver (E1-R) and an output of the sender (E2-S) mapped to an input of the receiver (E2-R). Thus, as shown, the steps B1 and B2 may be executed before an output is sent to the receiver (E1-R), and then the steps A1, A2, A3 may be executed. An output is then sent to the receiver (E2-R) so that steps B3 and B4 may be executed.

In the example of Figure 4c, execution of a process may be initiated via a web browser interface. A process flow may be simulated, for example, by a user changing an activity status manually with a mouse click. A user may track a current status for each activity on the execution page, for example, based on color coding. Examples of current statuses may include, for example, statuses of available, commenced, completed, suspended, terminated, or aborted. The user may, for example, initiate execution of new processes, open existing instances, and monitor the extent of completion of the process flow.

An example advantage of such an example implementation of the scenario described above is design-time flexibility. After the business process has been modeled using a graphical editor, services implementing different process steps may be easily exchanged during design-time. Integrating a new carrier into the systems, for example, may only involve connections of the carrier services to the appropriate process steps as well as the development of the necessary message transformations. As the process execution engine 424 may simply execute predefined processes, for example, a dynamic exchange of carriers during run-time based on their availability may be achieved, for example, based on automatic generation of collaborative processes, for example, between carriers and potential shippers.

Services available in example business systems of partners may need to be invoked in a certain order as they are involved in the internal processes of the partner. In one scenario, for example, it may not make sense to invoke a "track and trace" service of a carrier before a shipping request has been sent to that carrier. However, as discussed previously, partners interacting during a business process may only want to make parts of their internal processes visible to the outside, for example, because of proprietary internal development, and thus, private and public processes may be utilized. As an example, a private process may include a detailed, internal process of a partner, which may include one or more trade secrets of the partner. Based on this process, a view, referred to herein as a public process, may be created.

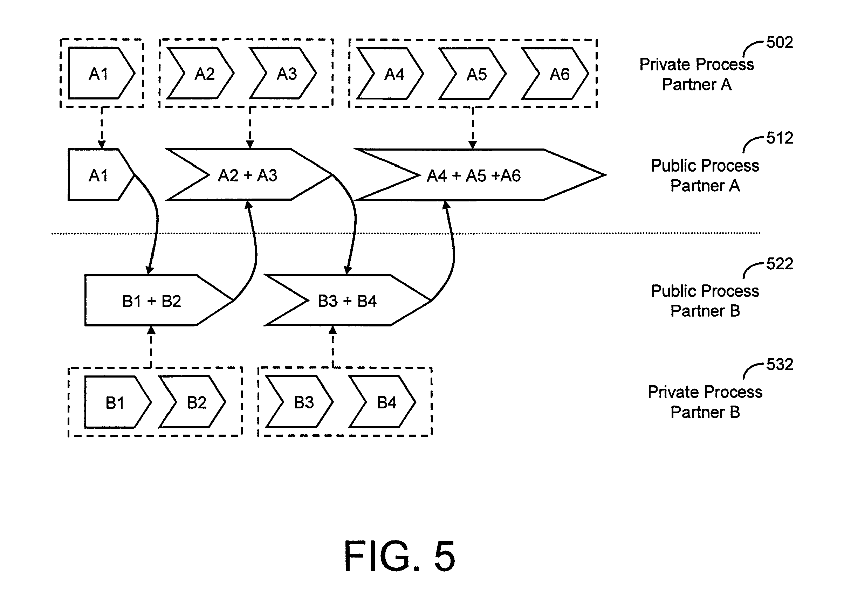

Figure 5 illustrates example public and private processes of example partners A and B. As shown, a private process 502 of partner A may include private process steps A1, A2, A3, A4, A5, and A6. A public process 512 of partner A may also include public process steps A1, A2, A3, A4, A5, and A6. Similarly, a public process 522 of partner B may include public process steps B1, B2, B3, and B4 of a private process 532 of partner B.

In order for the processes of the partners to coordinate successfully, it may be necessary for certain steps of the private process 532 of partner B to be executed before other steps of the private process 502 of partner A may be successfully executed. For example, partner B may need for partner A to execute A1 before partner B executes B1. Partner A may need for partner B to execute B1 and B2 before partner A executes A2. Partner B may need for partner A to then execute A2 and A3 before partner executes B3. partner A may need for partner B to execute B3 and B4 before partner A executes A4, A5, and A6. As discussed previously, the public processes 512, 522 may conceal confidential process details and may only expose process steps that may be required for an interaction. Public processes may then used by business partners to create a collaborative business process (CBP) that may involve both internal and external business services.

Some elementary terms as used herein may be defined as follows.

An ontology *O* may be defined as a structure

$$O := (C, R, A, T, \leq_C, \leq_R, \leq_A, \leq_T, \sigma_R, \sigma_A)$$

wherein:

- C is a set of concepts aligned in a hierarchy $\leq_C$
- R is a set of relations aligned according to $\leq_R$
- A is a set of attributes aligned according to $\leq_A$
- T is a set of data types aligned according to $\leq_T$
- $\sigma R : R \to C \times C$ is the signature of R
- $\sigma_A : A \to C \times T$ is the signature of A.

An example domain of $r \in R$ may be defined as $dom(r) := \pi_1(\sigma R (r))$ and the range as $range(r) := \pi 2(\sigma R (r))$.

An XML schema may be defined as a structure

$$S := (E, A, CT, ST, \delta_e, \alpha_e, \delta_a, \Gamma)$$

wherein:

- E is a set of element names
- A is a set of attribute names
- CT is a set of complex type names
- ST is a set of simple type name
- a function $\delta_e : E \to (CT \cup ST)$ defines the data type of an element $e \in E$
- a function $\delta_a : A \to ST$ defines the data type of an attribute $a \in A$
- a function $\alpha_e : E \to B (A)$ defines the set of attributes for each element $e \in E$
- a regular tree grammar $\Gamma$ specifies the structure of a valid XML schema

A mapping "map" between two structures S and T may be defined as a set of mapping elements me. Each mapping element may relate entities of a source structure $e_{s,i}, ..., e_{s,j}$ to entities of a target structure $e_{T,m}, ..., e_{T,n}$ using a mapping expression. The mapping expression may specify how entities of the source structure and the target structure are related.

$$map_{S \to T} = \{me\}$$

$$me = (e_{S,i}, \ldots, e_{S,j}, e_{T,m}, \ldots, e_{T,n}, mapexp)$$

This definition of mapping may not restrict the relation between entities of the source and the target structure to be 1 : 1, but rather may allow for m:n relations. Further, the nature of the involved mapping expressions may not be further restricted, as the nature may depend on the type of the source and target structure involved.

An alignment $A_{Ss} \to O_T$ from an XML schema $S_s$ to an ontology $O_T$ may be defined as a mapping with

$$A_{Ss} \to O_T = \{(e_{Ss,i}, \ldots, e_{Ss,j}, e_{O_T,m}, \ldots, e_{O_T,n}, mapexp)\}$$

$$e_{Ss,x} \in E_{Ss} \cup A_{Ss}$$

$$e_{O_T,y} \in C_{O_T} \cup R_{O_T} \cup A_{O_T}$$

As illustrated in Figure 4b, an example architecture may include at least two parts: a design-time component and a run-time component. During design-time, the creation of the CBP may be simplified as discussed below. According to an example embodiment, after loading two public processes, the CBP may be generated automatically and may be presented to a user. Furthermore, message mappings for invoking Web services may be generated. According to an example embodiment, representations of two public processes may not only include the process flow of the processes but also XML schemas (XSDs) of input and output messages associated with each process step.

After loading specifications of the two public processes, the lifting engine 104 of Figure 1 may generate: i) an alignment between the message elements of the XSDs and the domain ontology, and ii) a semantic description of the public processes.

The example mapping engine 118 may then use the alignments between the ontology and the XSDs to generate a list of possible mappings. The example composition engine 116 may use this list of possible mappings and the semantic process descriptions to generate the collaborative process. According to an example embodiment, the collaborative process may be presented to the user using the verification user interface 122. After a check by the user and possible modifications of the collaborative process the result may be stored in the process repository 120.

According to an example embodiment, during run-time an example dynamic selection of services may be performed based on different criteria. As an example, it may be desired to select a carrier offering the cheapest price for a given shipment. A semantic service selection may be used to make the selection. Based on a concrete request, contractual information modeled in the domain ontology and a selection goal, the best process may be selected from the process repository 120, and may be instantiated and executed.

As discussed previously, a first step in the example design-time architecture may include a lifting of the public processes of the two partners. This lifting may include two parts, the lifting of the input and output messages associated with the process steps and the lifting of the process descriptions. Figures 4a and 6-7 illustrate an example of such a lifting operation.

According to an example embodiment, in order to create an alignment between the domain ontology and the input and output messages the example lifting engine 104 may execute a set of elementary matching algorithms, for example, the matchers 404, 406 of Figure 4a. As discussed previously, an example matching algorithm may exploit the information available in the XML schema 402 and the ontology (e. g., element and concept names) 112 to create an example similarity cube or similarity matrix 408, as shown in Figure 4a.

The example similarity matrix 408 may associate each pair of XML schema and ontology entities ($e_s$, $e_o$) with $e_s \in E \cup A$ and $e_o \in C \cup R \cup A$ with a similarity value. Based on the example similarity matrix 408 an alignment between the XML schema of the XSD 402 and the domain ontology 112 may be calculated, for example, by the alignment generator 110.

For the automatic process composition by the composition engine 116 shown in Figure 1, the public process description of the shipper as well as the available WSDL descriptions of the carrier services may need to be transformed to a format suitable for input to the composition engine 116. An example composer technology may be based on a semantic Web services composition approach, as discussed herein. For each partner which is to be integrated in the composed process, an example semantic Web service interface description may include the messages communicated by the semantic Web service expressed as ontology concepts, and behavioral constraints between the single message exchanges of the semantic Web service.

Thus, for example, the behavioral constraints may be communicated via an example workflow diagram, for example, via an example Unified Modeling Language (UML) 2.0 Activity Diagram, including control nodes, such as decision, merge, fork and join. The activities in the example diagram may be connected to input and output nodes representing the messages communicated. According to an example embodiment, each example message may be understood, not as a technical XML schema description, but as an ontology concept so that a corresponding XML schema may be nominated, as discussed below.

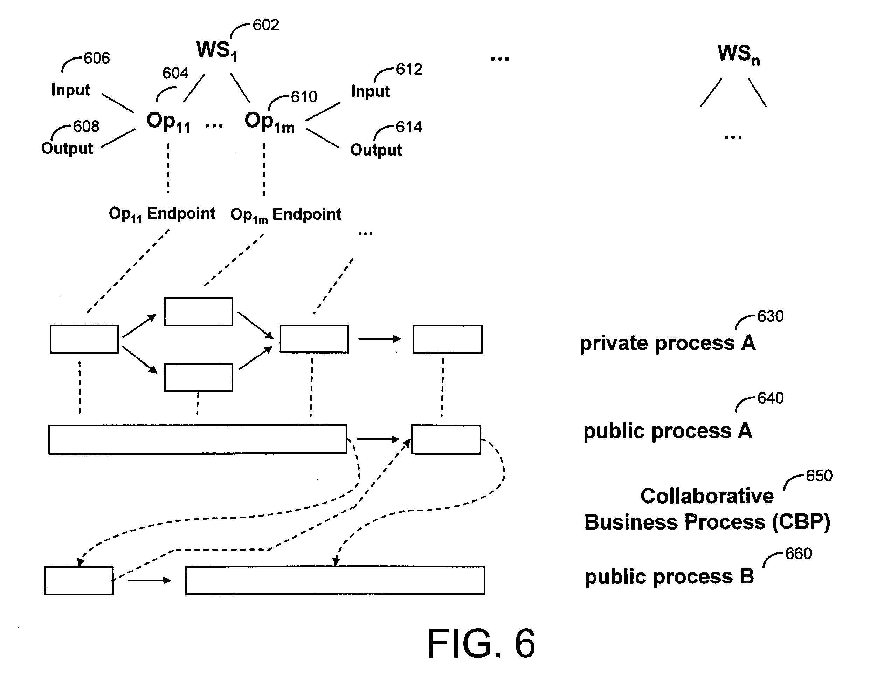

Figures 6, 7, 8, 9, and 10 depict example web service diagrams illustrating, for each web service $WS_i$ 602, example operations, for example, $Op1_1$ 604 having input 606 and output 608, ..., $Op1_m$ 610 having input 612 and output 614, of each web service $WS_i$, showing inputs and outputs associated with each web service, according to an example embodiment. Example nodes representing the operations of private process 630 of example partner A are illustrated, specifically showing a flow of execution of the process 630. Example nodes representing the operations of public processes 640, 660 of example partners A and B are also illustrated, specifically showing a flow of execution of the processes, as well as the correspondence between the web service node format and the public process nodes of the partners. A CBP 650 may then be generated as discussed previously.

According to an example embodiment, information that may be available for an example shipper partner may include its public process and links of the public process steps to specific WSDL operations. From this information, example semantic Web service descriptions may be generated as follows:

1) Each WSDL operation may be represented by an input node and an output node connected via a sequential control edge. This example construct may be referred to as a semantic Web service operation, for example, such as the example $Op1_1$ shown in Figure 6.

2) Data communicated by the input and output node may be represented by ontology concepts obtained by the alignment generator 110 of the lifting engine 104 from the corresponding WSDL operation's XML schema.

3) The semantic Web service operations may be connected by semantic Web service behavioral constraints that may resemble the workflow of the public process of the shipper.

With regard to example carrier services, the WSDL files of the carrier's Web services may be obtained. An example alignment of XML schema types communicated to ontology concepts may be generated by the lifting engine 104 via the alignment generator 110. According to an example embodiment, a representation of causal interdependencies between the operations that may be used to create the semantic Web service behavioral constraints may also be needed. Thus, a trivial workflow may be constructed that may be used as input to the composition engine 116.

According to an example embodiment, example semantic Web service descriptions may be generated as follows:

1) Each WSDL operation may be represented by an input node and an output node connected via a sequential control edge. This construct may be referred to as a semantic Web service operation, for example, such as the example $Op1_1$ shown in Figure 6.

2) Data communicated by the input and output node may be represented by ontology concepts that are obtained by the alignment generator 110 of the lifting engine 104 from the corresponding WSDL operation's XML schema.

3) The semantic Web service behavioral constraints may describe a workflow that may include a fork and a join node. Each branch of this fork-join construct may include, for example, exactly one semantic Web service operation.

Automatic generation of message mappings may be performed by the example mapping engine 118 of Figure 1, which may, for example, receive alignments generated by the lifting engine 104 as input and may generate executable mappings between XML schemas. For example, in order to generate a mapping between S1 and S2, the mapping engine may input the alignments $As_1 \rightarrow O$ and $As_2 \rightarrow O$. For each mapping element in $As_1 \rightarrow O$ the mapping engine 118 may search for a mapping element in $As_2 \rightarrow O$ that relates a schema entity of $S_2$ to an equivalent ontology entity. If such an entity is found, the mapping expression may be used to determine how the schema entities of $S_1$ and $S_2$ are related. As a result, a new mapping expression may be added to the mapping map $S_1 \rightarrow S_2$.

It is noted that business partners generally may tend to follow their own business processes. The business processes associated with business partners may include process steps that on the one hand exchange data among themselves, and on the other hand also collaborate with processes of their partners. Thus, as discussed previously, in order to integrate two business partners with each other, their business processes may need to be interconnected. Business processes typically may not be handled as an atomic transaction. For example, in a process step, a particular company may have interactions with its partner before proceeding to a next step, which results in some communication before it enters the next process step, etc., as discussed previously.

The integration of two business partners in a message-based communication environment, for example, such as a service-oriented architecture, may however only work on the basis of atomic transactions. Thus, integration or combining of the processes may need to follow the sequential constraints of the message exchanges defined by both parties' business processes. These sequential constraints may be referred to as "behavioral constraints" or as the "behavior" of a business partner's systems. Such information may not be easily represented by traditional Web service descriptions using WSDL. Thus, for an automatic creation of such an integration or combining, for example, the collaborative process, a partner's behavior may need to be explicitly specified in a machine-processable format. Thus, the observable part of a business partner's behavior may be formatted based on semantic Web service descriptions. A composition engine such as the example composition engine 116 may then combine these sets of behavioral constraints to generate a combined business process of all parties involved.

Example inputs for the composition engine 116 may thus include semantic Web service descriptions (SWSDs) of the participating business partners. The composition engine 116, for example, may compare the inputs and outputs that may be defined as ontology concepts in the two behavior descriptions and may connect or map them where possible.

The composition engine 116 may rely on the results from the preceding alignment generator 110 in determining whether such a connection or mapping may be possible. The example alignment generator 110 may generate an alignment that connects those XML schema elements for which a mapping may be later generated to the same ontology element. Thus, the composition engine 116 may search for equivalent concepts in the two behavior descriptions that it may be able to connect.

In determining the connectability of pairs of outputs and inputs, it is noted that an output and an input may stem from a process step of the same or different business partners. The party owning the output message may be referred to as a "sender" and the party owning the input message may be referred to as a "receiver," as shown in Figure 4c. The respective XML schemas may be referred to as $S_{out}$ and $S_{in}$.

For evaluating the suitability of an output and an input concept, the composition engine may consider two sets of alignments: one for the sender $As_{out} \rightarrow O$, and one for the receiver $As_{in} \rightarrow O$. An output concept may be connected to an input concept if the whole XML schema corresponding to the input concept ($S_{in}$) is part of the XML schema corresponding to the output concept ($S_{out}$). A condition indicating whether an XML schema $S_{in}$ is part of an XML schema $S_{out}$ may be referred to as partOf (Sin, $S_{out}$). The suitability of two concepts may then be defined as:

An input concept $C_{in}$ suits an output concept $C_{out}$, if the receiver's XML schema $S_{in}$ is contained in the sender's XML schema $S_{out}$: partOf ($S_{in}$, $S_{out}$).

After identifying matching concepts, the composition engine 116 may connect fitting edges by a transformation activity node that defines a conversion which may need to be performed in the real-time execution of the combined process. This conversion may be specified by an example mapping function mapS$_1 \rightarrow$S$_2$, which may specify a transformation of actual data corresponding to the XML schema of the sender $S_1$ to a message corresponding to the receiver's format $S_2$. The result of the composition, or the collaborative process, may include a business process that includes the process steps of both parties, their interconnections via mapping activities, and those inputs and outputs that could not be interconnected.

The example composition may be regarded as successful, when there are no inputs and outputs left that could not be connected to corresponding communications of the other party.

The result generated by the composition engine 116 may be translated into a process representation format of the verification user interface 122 and may be presented to a user. Further, if the composition engine 116 is unable to complete generation of a collaborative process, a partly connected business process may be input to the verification user interface 122 as a first suggestion for adaptation by the user.

Business partners may not need to adhere to exactly the same software component interfaces. Thus, mediation may be used for interacting with the semantic Web service composition. When a carrier changes its conditions, the process of composition may need to be executed again in order to compute the potential modifications to the process instance. As an example, this step could be executed each time a customer requests a shipment. Thus, the system could immediately and automatically incorporate changes to the carrier capabilities.

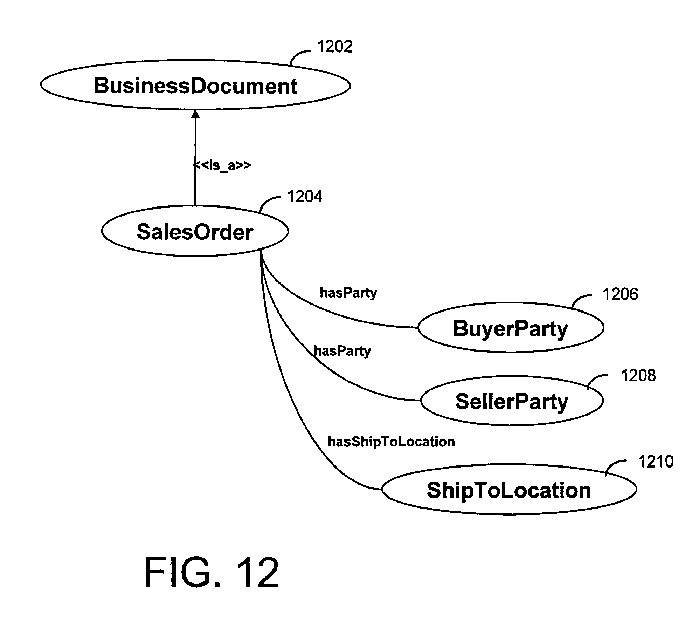

Figure 11 illustrates example WSDL files that include XSDs or XML schemas and example process steps associated with WSDL operations for an example party 1 (1102) having an example sales order request 1104 and a party 2 (1106) having an example ordering party message 1108. As shown, each of the example sales order request 1104 and ordering party message 1108 include a WSDL format. As shown, the WSDL file for party 1 (1102), having a name "SalesOrderOut," includes a WSDL operation "CreateSalesOrder" and an output message "SalesOrderRequest." The associated process steps indicate an output for the sales order request 1104. Further, as shown, the WSDL file for party 2 (1106), having a name "OrderingPartyIn," includes a WSDL operation "GetOrderingParty" and an output message "OrderingPartyMessage." The associated process steps indicate an output for the ordering party message 1108. Figures 12-16 further show an example mapping of the output sales order request 1104 of party 1 (1102) to the input ordering party message 1108 of party 2 (1106), according to an example embodiment.

Figure 12 illustrates an example ontology for "SalesOrder" that may be determined as including similar relationships of data elements of each of the parties 1102, 1106. As shown in the example of Figure 12, a business document 1202 is defined. A sales order 1204 is shown as having an "is_a" relationship to the business document 1202. The sales order 1204 is shown as also having a "hasParty" relationship with a buyer party 1206 and a seller party 1208, and a "hasShipToLocation" relationship with a ship-to location 1210.

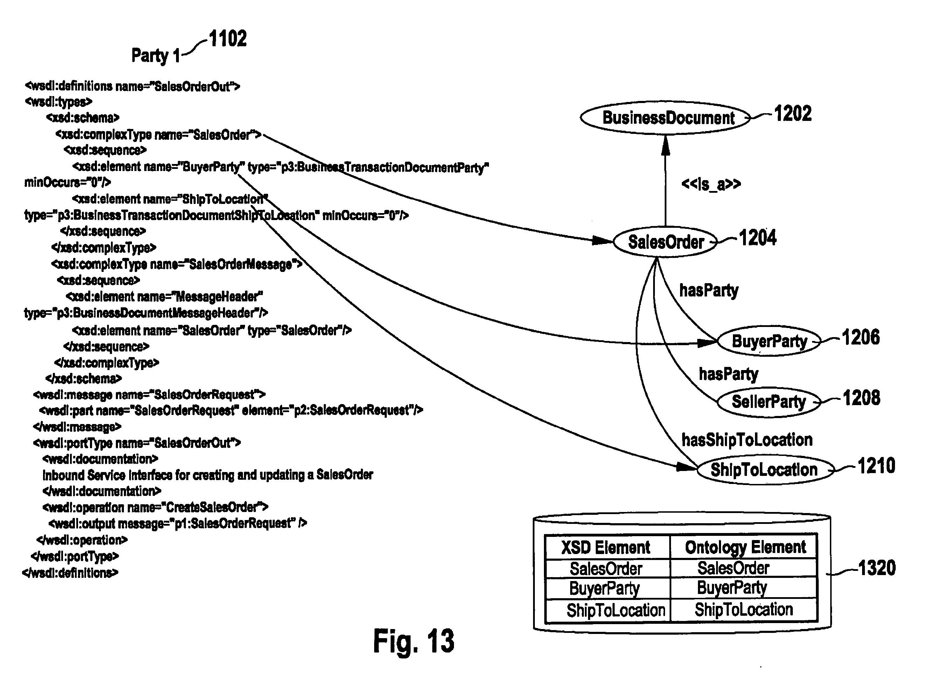

Figure 13 illustrates an example alignment 1320 of the XML schema for party 1 (1102) with the "SalesOrder" ontology elements of Figure 12. For example, as shown, an XSD element for SalesOrder is aligned with the ontology element sales order 1204, an XSD element for BuyerParty is aligned with the ontology element buyer party 1206, and an XSD element for ShipToLocation is aligned with the ontology element ship-to location 1210. The example alignment may be generated, for example, by the alignment generator 110 of Figure 1.

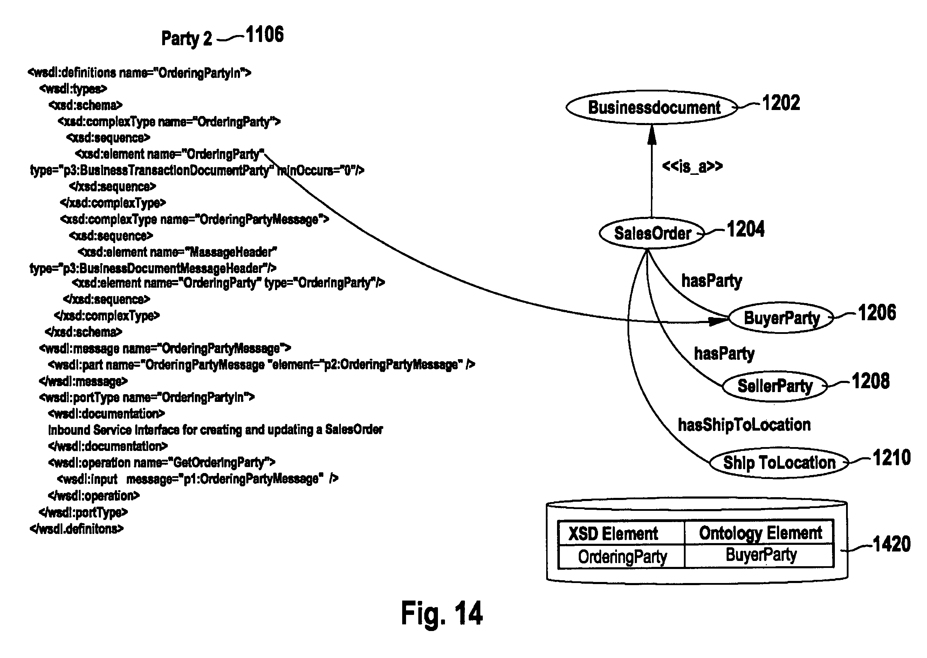

Figure 14 illustrates an example alignment 1420 of the XML schema for party 2 (1106) with the "SalesOrder" ontology elements of Figure 12. For example, an XSD element for OrderingParty is aligned with the ontology element buyer party 1206. Such an alignment may be generated by the alignment generator 110.

Figure 15 and Figure 16 illustrate an example mapping 1502, 1602 of the XML schemas for the parties with the ontology elements. It may be noted that these example mappings are not generated between each pair of schemas but only between input schemas of one public process and output schemas of the other and vice versa. As shown in Figure 15, each of the XSD elements BuyerParty of Party 1 (1102) and OrderingParty of Party 2 (1106) are aligned with the ontology element buyer party 1206, and thus, the mapping 1502, 1602 maps BuyerParty of Party 1 (1102) to OrderingParty of Party 2 (1106). The example mapping may be generated, for example, by the mapping engine 118. Thus, the output sales order request 1104 of party1 (1102) may be mapped to the input ordering party message 1108 of party 2 (1106).

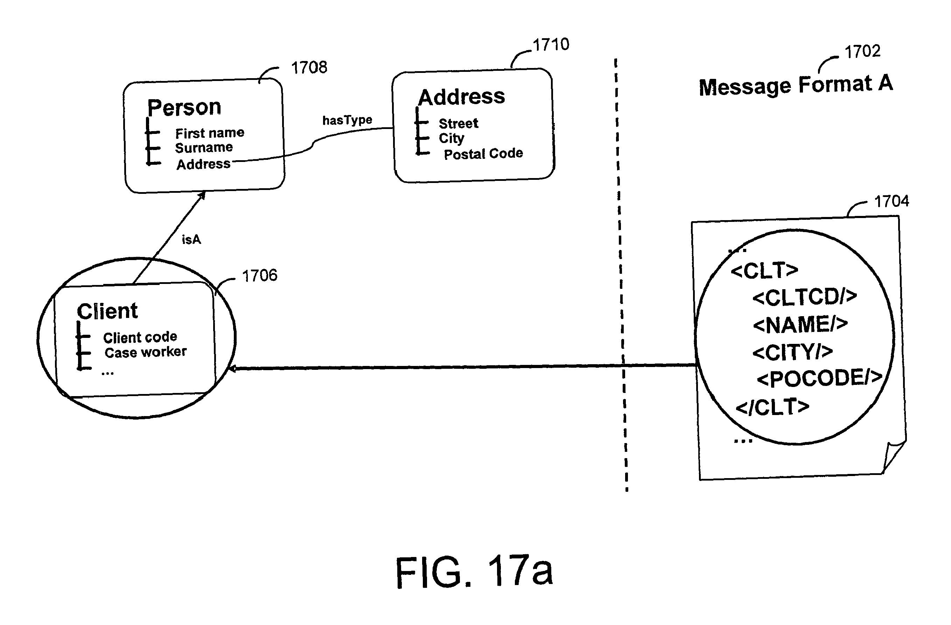

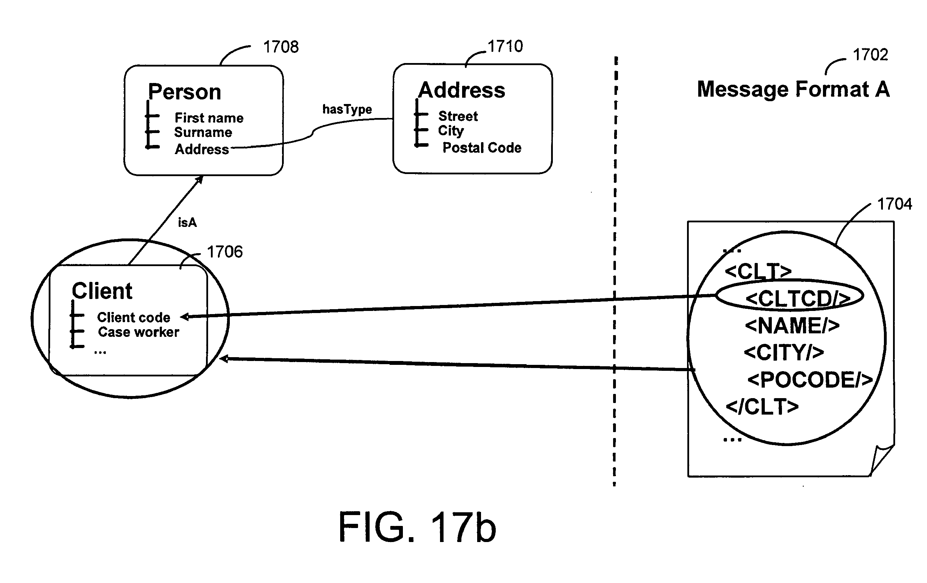

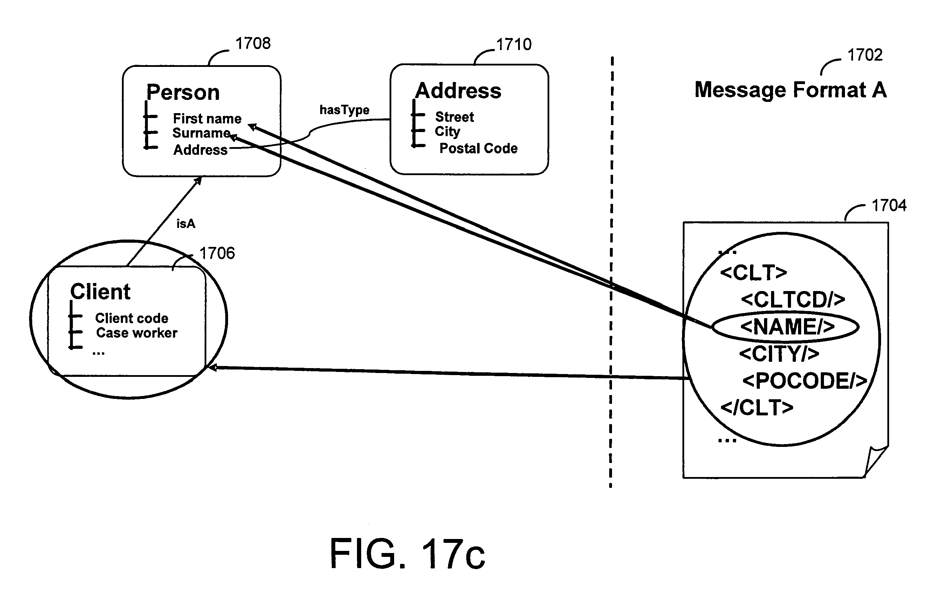

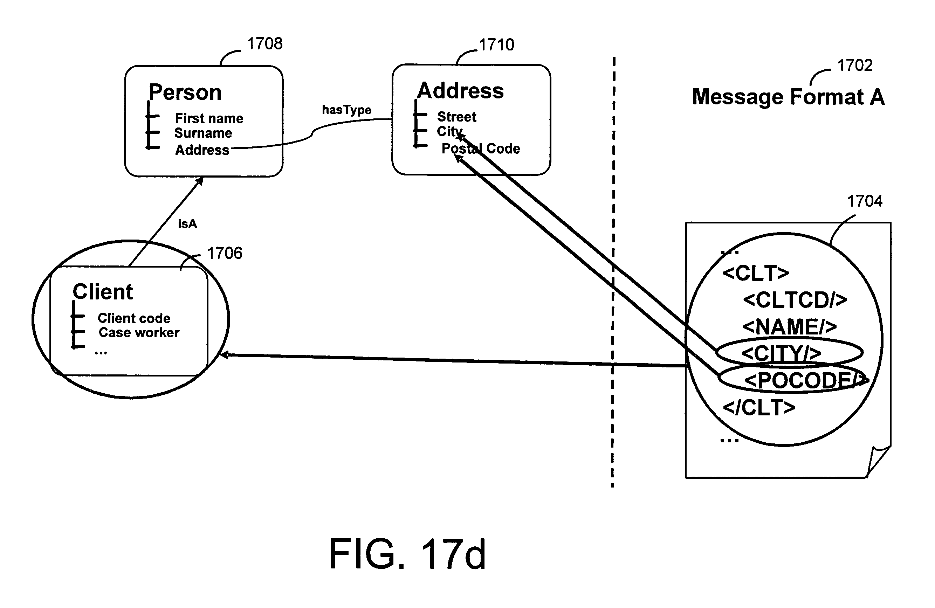

Figures 17a-17d illustrate example relationships of data elements included in an example message format associated with an example process associated with an example party A. For example, as shown in Figure 17a, an example message format A 1702 includes a message format 1704 for a client. The message format of a "clt" of the format 1704 may correspond to a client 1706, which has an "isA" relationship with a person 1708, which in turn has a "hasType" relationship with an address 1710. Figure 17b illustrates a recognition of a "cltcd" field of the message format 1704 with a client code field of the client 1706. Figure 17c illustrates a recognition of a "name" field of the message format 1704 with first name and surname fields of the person 1708. Figure 17d illustrates a recognition of a "city" field and a "pocode" field of the message format 1704 with a city code field and a postal code field, respectively, of the address 1710.

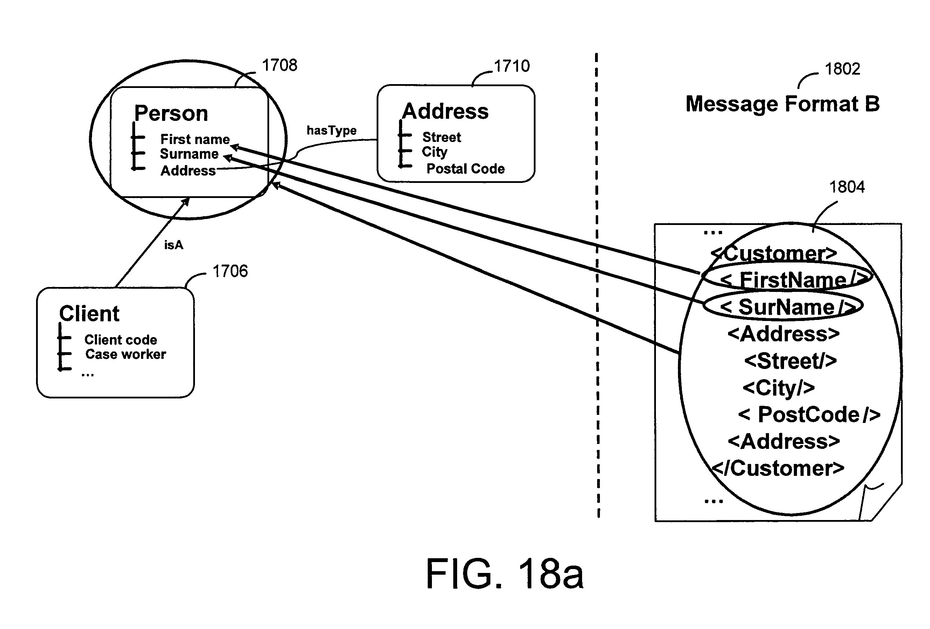

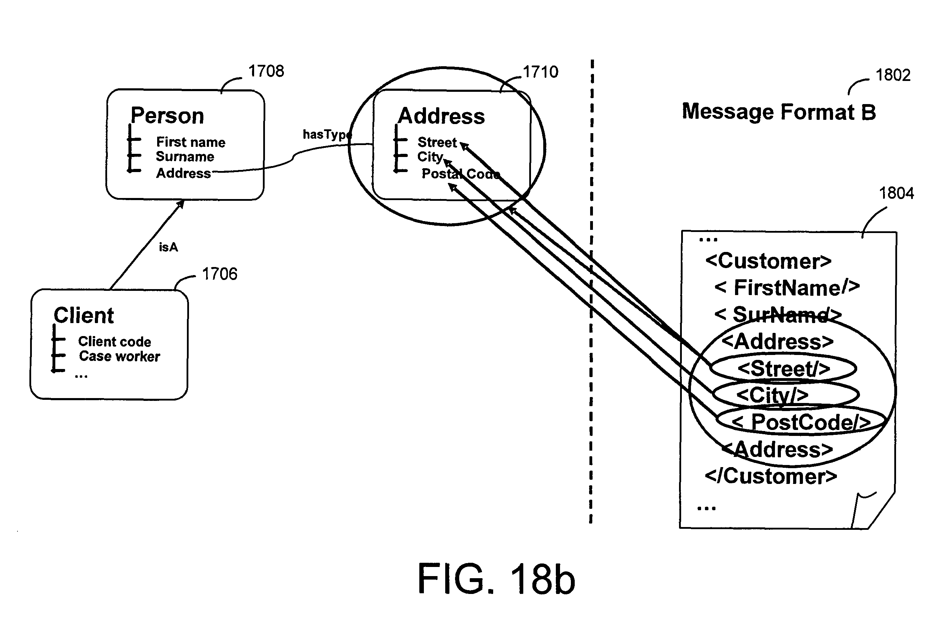

Figure 18a-18b illustrates example relationships of data elements included in an example message format associated with an example process associated with an example party B. For example, as shown in Figure 18a, an example message format B 1802 includes a message format 1804 for a client. The message format of a "customer" of a format 1804 corresponds to the person 1708. Figure 18a illustrates a recognition of a "FirstName" field and a "SurName" field of the message format 1804 with first name and surname fields of the person 1708. As shown in Figure 18b, a message format of an "address" of the format 1804 corresponds to the address 1710. Figure 18b illustrates a recognition of a "street" field, a "city" field and a "PostCode" field of the message format 1804 with a street, the city, and postal code fields, respectively, of the address 1710.

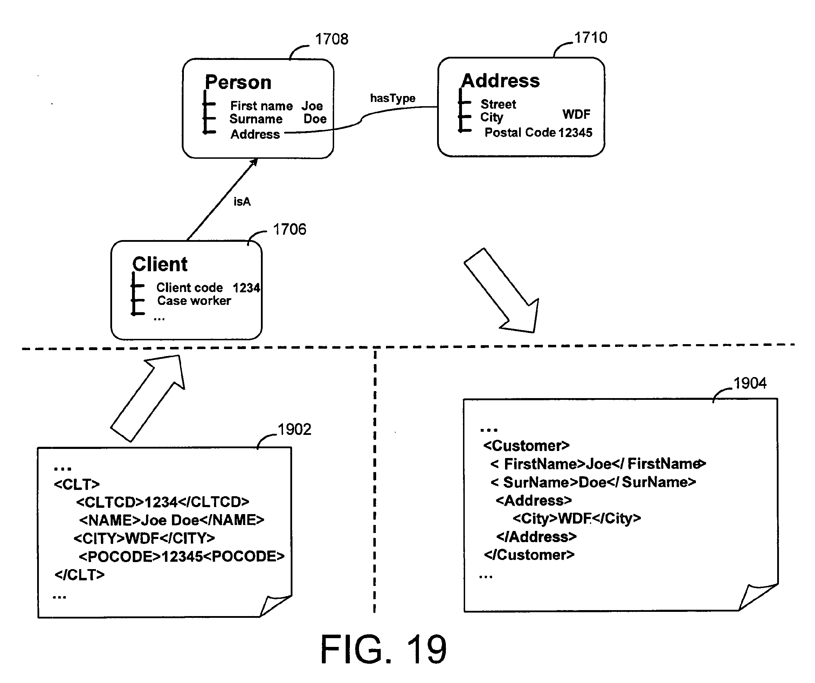

Figure 19 illustrates an example conversion, or mapping of the example message format associated with the example party A of Figures 17a-17d to the example message format associated with the example party B of Figures 18a-18b. As shown in Figure 19, a message 1902 for the client Joe Doe is converted to a message 1904 for a customer Joe Doe.

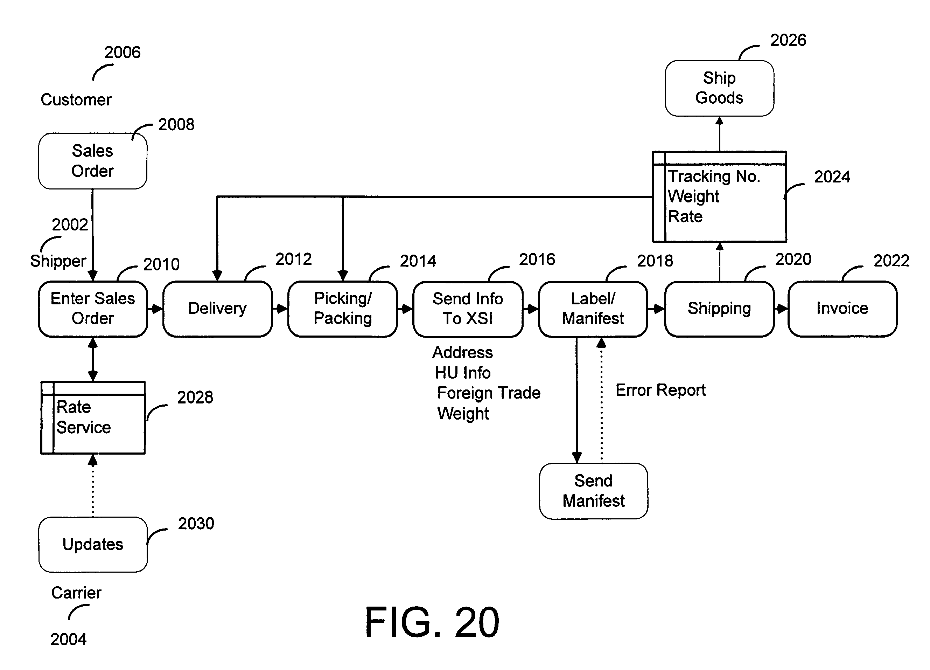

Figure 20 illustrates an example process flow associated with an example shipper 2002, an example carrier 2004, and an example customer 2006. As discussed previously, an example business process discussed herein may involve an order-to-cash process in a logistics domain. An example process, as illustrated in Figure 20, may involve three parties: i) the customer 2006, ii) the shipper 2002, and iii) the carrier 2004. As illustrated, the customer 2006 may first place a sales order 2010 with the shipper 2002, which may enter the sales order in the shipper's local business system (2010). After the sales order entry, appropriate steps may be followed by the shipper for delivery 2012, picking, and packing 2014. After sending the shipping information 2016, for example, to an Express Shipping Interface (XSI), the goods may be labeled and a manifest may be sent to the carrier (2018). The labeling and manifest transmission may trigger the actual shipping by the carrier (2020), which may be tracked by a shipping process step (2024, 2029) in a business system of the shipper. The next activity may include execution of a billing process, for example, to generate an invoice (2022).

Occasionally, carriers may change their conditions of service. When this occurs, the carrier may need to notify the shipper of updates in the conditions of service (2028, 2030). For example, if the carrier changes its policy to its customers from a policy of shipping overnight to a policy of shipping within two business days, the shipper may need to be notified to ensure that customers of the shipper may be informed. As another example, for a new contractual relationship between a shipper and a carrier, new conditions associated with the relationship may need to be input into the shipper's system.

In the order-to-cash process described above, different systems may be involved. For example, the shipper may be a store in the business of selling merchandise online or by telephone ordering, and the carrier may be in the business of transporting and delivering parcels such as United Parcel Service (UPS). As an example, the processes associated with the business of an example carrier may be provided via an example Web service interface.

An example shipper may use a system configured to integrate the systems of different parties. However, as shown in Figure 20, it is possible that not all process steps of the shipper and carrier may be accessed and used directly by the other party. For example, some process steps of the example carrier, for example UPS, may need to be configured to interact with, for example, proprietary processes used by the example shipper. These proprietary processes of the shipper may be different from the processes used by the example carrier. As another example, the process steps of labeling, preparing the manifest, and the shipping itself may be highly influenced by the specific requirements of a respective carrier. For example, carriers such as Federal Express and UPS may require different labels and packaging, and the underlying business processes used by the respective carriers may include different operations and data inputs and outputs, and may include different ordering of operations. Therefore, these steps may be mainly implemented by the respective carriers.

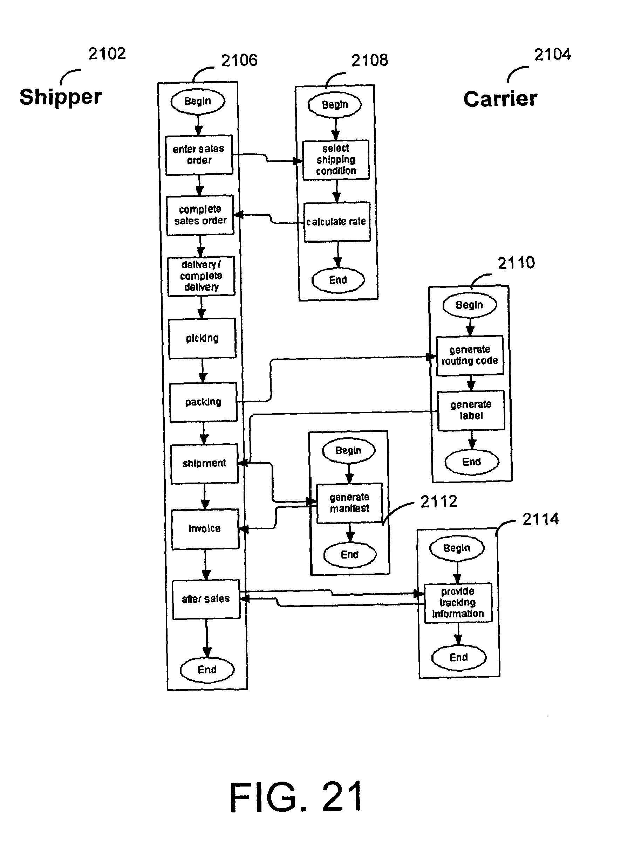

Figures 21-23 illustrate various example scenarios of shipper (2102) processes interacting with carrier (2104) processes, showing example data formats of data that each process may use, and example ordering of process operations for each partner. In Figure 21, in a shipper process 2106, a shipping condition selection, routing code calculation and rate calculation may all be performed during an example sales order step (2108). These example operations may be possible if the total weight of the parcels is already known during sales order entry (e.g., if standardized packaging is used). After the goods have been picked and packed a label may be printed (2110) and the manifest may be generated (2112). For this example, the manifest may not be not generated after each individual shipment, and thus, a new entry may be added to the manifest for the daily manifest. After the sales, tracking information may be provided (2114).

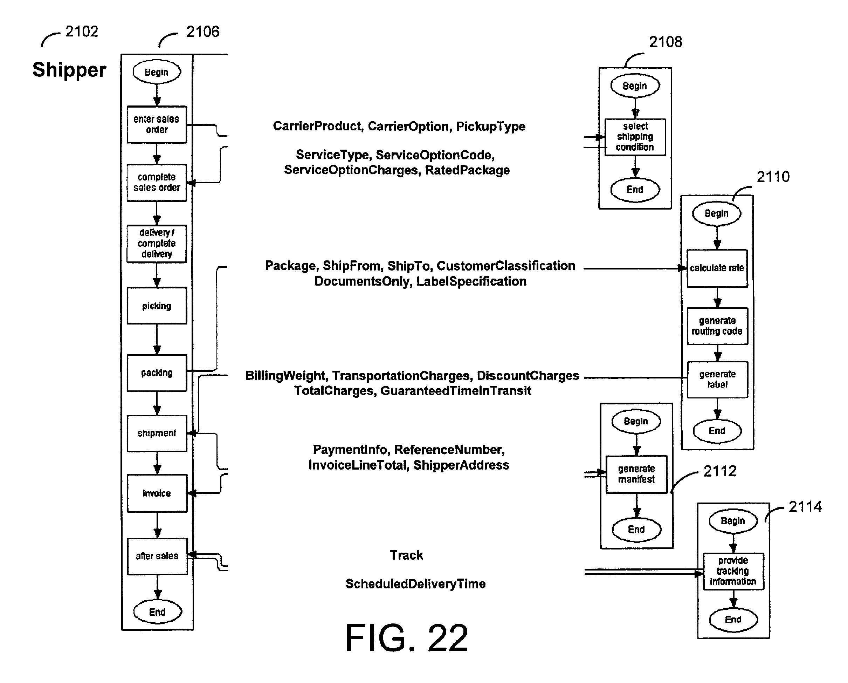

In Figure 22, according to this example, during sales order entry only the carrier and shipping condition may be selected and the routing code may be calculated (2108). The example rate may not be calculated (2110) until the goods have been packed as only then the final weight of the freight may be known. This scenario may apply if a shipper does not need rate estimations during sales order entry.

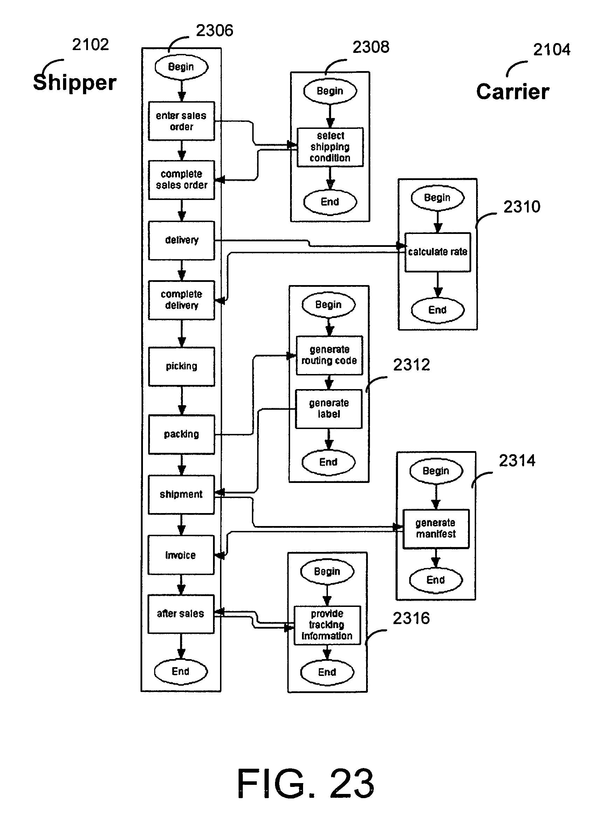

In Figure 23, in a shipper process 2306, a shipping condition may be selected (2308). If the shipper wants to use an option of combining several sales orders in one shipment, the routing code and the rate may not be calculated (2310, 2312) until this combination has been done. Thus, the services for calculating the routing code and the rate (2310, 2312) may be called during the delivery step. This is possible if the final weight of the freight is already known during delivery. Label and manifest operations (2314) may be called after packing and shipment. There may be two variants of this basic scenario: i) The rate calculation may be delayed until the goods have been packed as only then the total weight of the shipment may be available. Thus, the rate may be calculated before the label is printed. ii) A rate estimation may be made during sales order entry and the rate may be validated after shipment. Tracking information may be provided (2316) after sales are complete.

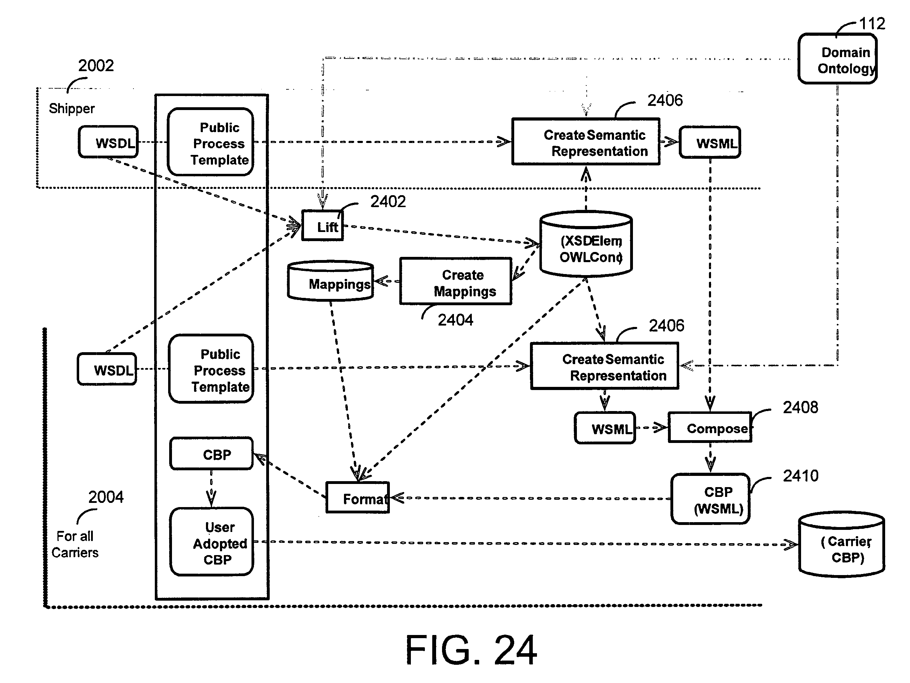

Figure 24 illustrates an example flow through an example collaborative process generator. As shown in Figure 24, a WSDL for the shipper 2002 and a WSDL for the carrier 2004 may be lifted (2402), for example, by the lifting engine 104. Mappings may be created (2404), for example, by the mapping engine 118. As discussed previously, the mappings may be created, for example, based on XSD elements of public processes of the shipper 2002 and carrier 2004, and on domain ontologies 112. Additionally, semantic representations may be created (2406), for example, by the semantic description generator 114.

A collaborative process, for example, a collaborative business process (CBP) 2410 may be composed (2408), for example, by the composition engine 116. The CBP 2410 may be composed (2408), for example, based on the mappings and the semantic representations. The CBP 2410 may then be stored, for example, in the process repository 120, and/or it may be verified, for example, via the verification user interface 122. The CBP 2410 may then be executed for use by the shipper 2002 and the carrier 2004.

Implementations of the various techniques described herein may be implemented in digital electronic circuitry, or in computer hardware, firmware, software, or in combinations of them. Implementations may implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

The processor and the memory may be supplemented by, or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes and equivalents will now occur to those skilled in the art. It is, therefore, to be understood that the appended claims are intended to cover all such modifications and changes as fall within the true spirit of the embodiments of the invention.

**Claims**

1. A method comprising:

    receiving (202) public specifications (1102, 1106) describing two or more proprietary processes (502, 532, 630), wherein the public specifications (1102, 1106) include a description language format description of operations (604, 610) associated with each of the proprietary processes (502, 532, 630) and a process format description of constraints associated with each of the operations (604, 610); and
    generating (204) a collaborative process (650, 2410) based on combining the received public specifications (1102, 1106) based on the description language format description, the process format description, and ontologies (1202, 1204, 1206, 1208, 1210) included in domain ontology storage (112).

2. The method according to claim 1 comprising verifying the collaborative process (650, 2410) via a graphical user interface (122).

3. The method according to claim 1 or 2 wherein receiving (202) the public specifications (1102, 1106) comprises receiving public specifications describing two or more proprietary business processes (502, 532, 630, 1104, 1108).

4. The method according to any one of claims 1 to 3 wherein receiving (202) the public specifications (1102, 1106) comprises receiving public specifications of a business process of a carrier (2004, 2104) of merchandise and a business process of a shipper (2002, 2102).

5. The method according to any one of claims 1 to 4 wherein receiving (202) the public specifications (1102, 1106) comprises receiving public specifications describing proprietary processes (502, 532, 630) of two or more business partners (2002, 2004, 2102, 2104).

6. The method according to any one of claims 1 to 5 wherein receiving (202) the public specifications (1102, 1106) comprises receiving a representation of data associated with at least one of the proprietary processes (502, 532, 630).

7. The method according to any one of the preceding claims wherein combining the received public specifications (1102, 1106) comprises generating a similarity matrix (408) based on the received public specifications (1102, 1106).

8. The method according to any one of the preceding claims wherein combining the received public specifications (1102, 1106) comprises:

    lifting a representation of input message types and output message types associated with at least one of the proprietary processes (640, 660); and
    lifting representations of the operations (604, 610) associated with the two or more proprietary processes (502, 532, 630).

9. The method according to any one of the preceding claims wherein combining the received public specifications (1102, 1106) comprises:

   generating a map (1502, 1602, 2404) of input message types and output message types associated with the two or more proprietary processes (502, 532, 630) based on the ontologies (112, 1202, 1204, 1206, 1208, 1210); and
   generating a semantic process description (2406) of one or more of the two or more proprietary processes (502, 532, 630).

10. The method according to any one of the preceding claims wherein combining the received public specifications (1102, 1106) comprises integrating different data formats associated with the two or more proprietary processes (502, 532, 630).

11. The method according to any one of the preceding claims wherein combining the received public specifications (1102, 1106) comprises:

    determining a first representation of an input and a first representation of an output associated with a first representation of an operation (604, 610) associated with a first one of the proprietary processes (502, 532, 630); and
    determining a second representation of an input to a second representation of an operation (604, 610) associated with a second one of the proprietary processes (502, 532, 630) based on the first representation of the output.

12. The method according to any one of the preceding claims wherein combining the received public specifications (1102, 1106) comprises:

    aligning syntactic operations and data associated with the received public specifications (110, 1320, 1420);
    generating a semantic description (2406) associated with each of the two or more proprietary processes (114, 502, 532, 630); and
    mapping (1502, 1602, 2404) the aligned syntactic operations and data (1320, 1420) to semantic representations of the syntactic operations and data based on ontologies (112, 1202, 1204, 1206, 1208, 1210) associated with the syntactic operations and data.

13. A system (100) comprising:

    a lifting engine (104) configured to receive (302) public specifications (1102, 1106) describing a first proprietary process and second proprietary process (502, 532, 630) and to determine (304) an alignment (110, 1320, 1420) between the public specifications (1102, 1106) and corresponding elements (1202, 1204, 1206, 1208, 1210) of an ontology domain (112);
    a mapping engine (118) configured to determine (306) one or more mapping expressions (1502, 1602, 2404) associated with the first proprietary process and second proprietary process (502, 532, 630) based on the determined alignment (1320, 1420); and
    a composition engine (116) configured to generate (308) a collaborative process (650, 2410) based on the one or more mapping expressions (1502, 1602).

14. The system according to claim 13 comprising a user interface (122) configured to verify the collaborative process (650, 2410).

15. The system according to claim 13 or 14 comprising domain ontology storage (112) configured to store representations of ontologies (1202, 1204, 1206, 1208, 1210).

16. The system according to any one of claims 13 to 15 wherein the first proprietary process (502, 532, 630) is associated with a first business partner (1102, 1106, 2002, 2004, 2102, 2104) and the second proprietary process (502, 532, 630) is associated with a second business partner (1102, 1106, 2002, 2004, 2102, 2104) having a business relationship with the first business partner (1102, 1106, 2002, 2004, 2102, 2104), and wherein the collaborative process (650, 2410) is configured to perform operations for the first and second business partners (1102, 1106, 2002, 2004, 2102, 2104).

17. The system according to any one of claims 13 to 16 wherein the mapping engine (118) is configured to determine the one or more mapping expressions (1502, 1602, 2404) associated with the first proprietary process and second proprietary process (502, 532, 630) based on the determined alignment (1320, 1420) and one or more of the representations of ontologies (112, 1202, 1204, 1206, 1208, 1210).

18. The system according to any one of claims 13 to 17 wherein:

the lifting engine (104, 114) is configured to generate a first semantic description corresponding to the first proprietary process (502, 532, 630) and a second semantic description corresponding to the second proprietary process (2406), and

the composition engine (116) is configured to generate the collaborative process (650, 2410) based on the first and second semantic descriptions (2406).

19. A method comprising:

receiving (302), by a lifting engine (104), public specifications (1102, 1106) describing two or more proprietary processes (502, 532, 630), wherein the public specifications include descriptions of operations (604, 610) associated with the two or more proprietary processes (502, 532, 630) and descriptions of constraints associated with the operations (604, 610); and

aligning (304, 1320, 1420), by the lifting engine (104), the received public specifications (1102, 1106);

mapping (306, 2404), by a mapping engine (118), the aligned (1320, 1420) public specifications (1102, 1106) to one or more mapping expressions (1502, 1602) based on representations of ontologies (1202, 1204, 1206, 1208, 1210) included in domain ontology storage (112); and

generating (308, 2408), by a composition engine (116), a collaborative process (650, 2410) based on the one or more mapping expressions (1502, 1602).

20. The method according to claim 19 wherein the public specifications (1102, 1106) include one or more syntactic formats and the mapping (306, 1502, 1602) comprises generating one or more activity diagrams associated with the received public specifications (1102, 1106) .

21. The method according to claim 20 wherein the activity diagrams include a semantic format.

FIG. 1

Receive public specifications describing two or more proprietary processes, wherein the public specifications include a description language format description of operations associated with each of the proprietary processes and a process format description of constraints associated with each of the operations — 202

Generate a collaborative process based on combining the received public specifications based on the description language format description, the process format description, and ontologies included in domain ontology storage — 204

# FIG. 2

Receive, by a lifting engine, public specifications describing two or more proprietary processes, wherein the public specifications include descriptions of operations associated with the two or more proprietary processes and descriptions of constraints associated with the operations — 302

Align, by the lifting engine, the received public specifications — 304

Map, by a mapping engine, the aligned public specifications to one or more mapping expressions based on representations of ontologies included in domain ontology storage — 306

Generate, by a composition engine, a collaborative process based on the one or more mapping expressions — 308

# FIG. 3

EP 1 879 139 A1

112
**Domain Ontology**

**Similarity Cube**

402

**XSD**

404
**Matcher 1**

406
**Matcher N**

408

410
**Aggregation**

$L_{S \rightarrow O}$

# FIG. 4a

Process Modeling

~422

102 Collaborative Process Generator

Deploy

Process
Repository
~120

Load

Process Execution Engine
~424

Invoke    Invoke    Invoke

Business
System A

Business
System B

Business
System C

# FIG. 4b

Partner: Bob

Start    Diagram click behaviour    Change status to competed ▽    **450**

CBP Workflow (Id:25)    Zoom: 100 ▽

**452**

**470**

**480** Private Process (Id:318)    Zoom: 100 ▽

ShowViewDiagram    Hide CBP Diagram

Legend
☐ Un-Instandated Activity    ☐ Suspended
☐ Available    ☐ Terminated
☐ Commenced    ☐ Aborted
☐ Completed

# Fig. 4c

EP 1 879 139 A1

FIG. 5

FIG. 6

FIG. 7

EP 1 879 139 A1

EP 1 879 139 A1

WS$_1$ ─602

606─
Input ─606

604─
Op$_{11}$ ... Op$_{1m}$ ─610

608─
Output

612─
Input

614─
Output

...

WS$_n$

...

Op$_{11}$ Endpoint   Op$_{1m}$ Endpoint

...

─630
private process A

─640
public process A

Create SWS Representation

Collaborative ─650
Business Process
(CBP)

─660
public process B

Create SWS Representation

# FIG. 8

FIG. 9

EP 1 879 139 A1

WS₁ ⌐602

⌐606 Input

⌐608 Output

604 ⌐

Op₁₁ ...

⌐610

Op₁ₘ

⌐612 Input

⌐614 Output

...

WSₙ

...

Op₁₁ Endpoint    Op₁ₘ Endpoint

...

Create Composed Workflow (CBP)

⌐630
private process A

⌐640
public process A

Collaborative ⌐650
Business Process
(CBP)

⌐660
public process B

FIG. 10

## Party 1 —1102

```
<wsdl:definitions name="SalesOrderOut">
<wsdl:types>
   <xsd:schema>
      <xsd:complexType name="SalesOrder">
      <xsd:sequence>
            <xsd:element name="BuyerParty" type="p3:BusinessTransactionDocumentParty"
minOccurs="0"/>
            <xsd:element name="ShipToLocation"
type="p3:BusinessTransactionDocumentShipToLocation" minOccurs="0"/>
         </xsd:sequence>
      </xsd:complexType>
      <xsd:complexType name="SalesOrderMessage">
      <xsd:sequence>
            <xsd:element name="MessageHeader"
type="p3:BusinessDocumentMessageHeader"/>
               <xsd:element name="SalesOrder" type="SalesOrder"/>
            </xsd:sequence>
         </xsd:complexType>
      </xsd:schema>
      <wsdl:message name="SalesOrderRequest">
         <wsdl:part name="SalesOrderRequest" element="p2:SalesOrderRequest"/>
</wsdl:message>
   <wsdl:portType name="SalesOrderOut">
   <wsdl:documentation>
      Inbound Service Interface for creating and updating a SalesOrder
   </wsdl:documentation>
      <wsdl:operation name="CreateSalesOrder">
         <wsdl:output message="p1:SalesOrderRequest" />
      </wsdl:operation>
   </wsdl:portType>
</wsdl:definitions>
```

1104

SalesOrderRequest

## Party 2 —1106

```
<wsdl:definitions name="OrderingPartyIn">
   <wsdl:types>
      <xsd:schema>
         <xsd:complexType name="OrderingParty">
         <xsd:sequence>
            <xsd:element name="OrderingParty"
type="p3:BusinessTransactionDocumentParty" minOccurs="0"/>
            </xsd:sequence>
         </xsd:complexType>
         <xsd:complexType name="OrderingPartyMessage">
         <xsd:sequence>
            <xsd:element name="MessageHeader"
type="p3:BusinessDocumentMessageHeader"/>
               <xsd:element name="OrderingParty" type="OrderingParty"/>
            </xsd:sequence>
         </xsd:complexType>
      </xsd:schema>
      <wsdl:message name="OrderingPartyMessage">
         <wsdl:part name="OrderingPartyMessage "element="p2:OrderingPartyMessage" />
      </wsdl:message>
      <wsdl:portType name="OrderingPartyIn">
         <wsdl:documentation>
            Inbound Service Interface for creating and updating a SalesOrder
         </wsdl:documentation>
         <wsdl:operation name="GetOrderingParty">
            < wsdl:input  message="p1:OrderingPartyMessage" />
         </wsdl:operation>
      </wsdl:portType>
</wsdl:definitons>
```

1108

OrderingPartyMessage

# Fig. 11

EP 1 879 139 A1

FIG. 12

EP 1 879 139 A1

Party 1 ⌐1102

```
<wsdl:definitions name="SalesOrderOut">
<wsdl:types>
    <xsd:schema>
        <xsd:complexType name="SalesOrder">
            <xsd:sequence>
                <xsd:element name="BuyerParty" type="p3:BusinessTransactionDocumentParty"
minOccurs="0"/>
                <xsd:element name="ShipToLocation"
type="p3:BusinessTransactionDocumentShipToLocation" minOccurs="0"/>
            </xsd:sequence>
        </xsd:complexType>
        <xsd:complexType name="SalesOrderMessage">
            <xsd:sequence>
                <xsd:element name="MessageHeader"
type="p3:BusinessDocumentMessageHeader"/>
                <xsd:element name="SalesOrder" type="SalesOrder"/>
            </xsd:sequence>
        </xsd:complexType>
    </xsd:schema>
    <wsdl:message name="SalesOrderRequest">
    <wsdl:part name="SalesOrderRequest" element="p2:SalesOrderRequest"/>
    </wsdl:message>
    <wsdl:portType name="SalesOrderOut">
        <wsdl:documentation>
        Inbound Service Interface for creating and updating a SalesOrder
        </wsdl:documentation>
        <wsdl:operation name="CreateSalesOrder">
        <wsdl:output message="p1:SalesOrderRequest" />
        </wsdl:operation>
    </wsdl:portType>
</wsdl:definitions>
```

BusinessDocument ⌐1202

<<ls_a>>

SalesOrder ⌐1204

hasParty

BuyerParty ⌐1206

hasParty

SellerParty ⌐1208

hasShipToLocation

ShipToLocation ⌐1210

| XSD Element | Ontology Element |
|---|---|
| SalesOrder | SalesOrder |
| BuyerParty | BuyerParty |
| ShipToLocation | ShipToLocation |

⌐1320

## Fig. 13

EP 1 879 139 A1

Party 2 —1106

```
<wsdl:definitions name="OrderingPartyIn">
  <wsdl:types>
    <xsd:schema>
      <xsd:complexType name="OrderingParty">
        <xsd:sequence>
          <xsd:element name="OrderingParty"
type="p3:BusinessTransactionDocumentParty" minOccurs="0"/>
        </xsd:sequence>
      </xsd:complexType>
      <xsd:complexType name="OrderingPartyMessage">
        <xsd:sequence>
          <xsd:element name="MessageHeader"
type="p3:BusinessDocumentMessageHeader"/>
          <xsd:element name="OrderingParty" type="OrderingParty"/>
        </xsd:sequence>
      </xsd:complexType>
    </xsd:schema>
    <wsdl:message name="OrderingPartyMessage">
      <wsdl:part name="OrderingPartyMessage "element="p2:OrderingPartyMessage" />
    </wsdl:message>
    <wsdl:portType name="OrderingPartyIn">
      <wsdl:documentation>
      Inbound Service Interface for creating and updating a SalesOrder
      </wsdl:documentation>
      <wsdl:operation name="GetOrderingParty">
        <wsdl:input  message="p1:OrderingPartyMessage" />
      </wsdl:operation>
    </wsdl:portType>
</wsdl.definitons>
```

Businessdocument —1202

<<is_a>>

SalesOrder —1204

hasParty

BuyerParty —1206

hasParty

SellerParty —1208

hasShipToLocation

Ship ToLocation —1210

| XSD Element | Ontology Element | |
|---|---|---|
| OrderingParty | BuyerParty | —1420 |

Fig. 14

EP 1 879 139 A1

| XSD Element Party 1 | XSD Element Party 2 | XSL T Transformation |
|---|---|---|
| BuyerParty | OrderingParty | copy <BuyerParty> to <OrderingParty> |

1502

## FIG. 15

Party 1 — 1102

Party 2 — 1106

1104
SalesOrderRequest

1108
OrderingPartyMessage

copy <BuyerParty> to <OrderingParty>

1602

## FIG. 16

EP 1 879 139 A1

FIG. 17a

EP 1 879 139 A1

FIG. 17b

1708

**Person**
- First name
- Surname
- Address

hasType

1710

**Address**
- Street
- City
- Postal Code

1702

**Message Format A**

1704

isA

1706

**Client**
- Client code
- Case worker
- ...

```
...
<CLT>
  <CLTCD/>
  <NAME/>
  <CITY/>
  <POCODE/>
</CLT>
...
```

# FIG. 17c

**Person** 1708

├ First name
├ Surname
├ Address

hasType

**Address** 1710

├ Street
├ City
├ Postal Code

isA

**Client** 1706

├ Client code
├ Case worker
...

**Message Format A** 1702

1704

...
<CLT>
  <CLTCD/>
  <NAME/>
  <CITY/>
  <POCODE/>
</CLT>
...

## FIG. 17d

FIG. 18a

FIG. 18b

FIG. 19

EP 1 879 139 A1

FIG. 20

EP 1 879 139 A1

FIG. 21

FIG. 22

2306

2102

**Shipper**

2308

2104

**Carrier**

Begin

2310

enter sales
order

Begin

Begin

complete
sales order

select
shipping
condition

calculate rate

delivery

End

End

complete
delivery

Begin

picking

generate
routing code

2312

packing

generate
label

2314

shipment

End

Begin

invoice

generate
manifest

after sales

Begin

End

End

provide
tracking
information

2316

End

End

**FIG. 23**

FIG. 24

EP 1 879 139 A1

| | European Patent Office | EUROPEAN SEARCH REPORT | Application Number EP 07 01 1128 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OMELAYENKO, BORIS: "Ontology-Mediated Business Integration" KNOWLEDGE ENGINEERING AND KNOWLEDGE MANAGEMENT. ONTOLOGIES AND THE SEMANTIC WEB : 13TH INTERNATIONAL CONFERENCE, EKAW 2002, SIGUENZA, SPAIN, OCTOBER 1-4, 2002. PROCEEDINGS, October 2002 (2002-10), pages 264-269, XP002449172 ISSN: 0302-9743 * the whole document * ----- | 1-21 | INV. G06Q30/00 |
| X | YUGYUNG LEE ET AL: "Towards intelligent web services for automating medical service composition" WEB SERVICES, 2004. PROCEEDINGS. IEEE INTERNATIONAL CONFERENCE ON SAN DIEGO, CA, USA 6-9 JULY 2004, PISCATAWAY, NJ, USA,IEEE, 6 July 2004 (2004-07-06), pages 384-391, XP010708870 ISBN: 0-7695-2167-3 * the whole document * ----- | 1-21 | |
| X | AGARWAL S ET AL: "Annotation, composition and invocation of semantic web services" WEB SEMANTICS: SCIENCE, SERVICES AND AGENTS ON THE WORLD WIDE WEB, ELSEVIER, vol. 2, no. 1, 1 December 2004 (2004-12-01), pages 31-48, XP004653842 ISSN: 1570-8268 * the whole document * ----- | 1-21 | TECHNICAL FIELDS SEARCHED (IPC) G06Q |

-/--

The present search report has been drawn up for all claims

| Place of search | Date of completion of the search | Examiner |
|---|---|---|
| The Hague | 4 September 2007 | Bohner, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 01 1128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PAVEL SHVAIKO ET AL: "A Survey of Schema-Based Matching Approaches" JOURNAL ON DATA SEMANTICS IV LECTURE NOTES IN COMPUTER SCIENCE;;LNCS, SPRINGER-VERLAG, BE, vol. 3730, 2005, pages 146-171, XP019026545 ISBN: 3-540-31001-0 ----- | 1-21 | |
| A | ALBERT P ET AL: "Configuration-Based Workflow Composition" WEB SERVICES, 2005. ICWS 2005. PROCEEDINGS. 2005 IEEE INTERNATIONAL CONFERENCE ON ORLANDO, FL, USA 11-15 JULY 2005, PISCATAWAY, NJ, USA,IEEE, 11 July 2005 (2005-07-11), pages 285-292, XP010851807 ISBN: 0-7695-2409-5 ----- | 1-21 | |
| A | US 2005/096960 A1 (PLUTOWSKI MARK E [US] ET AL) 5 May 2005 (2005-05-05) * paragraph [0020] - paragraph [0027] * * paragraph [0034] - paragraph [0050] * ----- | 1-21 | TECHNICAL FIELDS SEARCHED (IPC) |

The present search report has been drawn up for all claims

| Place of search | Date of completion of the search | Examiner |
|---|---|---|
| The Hague | 4 September 2007 | Bohner, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 01 1128

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2007

| Patent document cited in search report | Publication date | Patent family member(s) | Publication date |
|---|---|---|---|
| US 2005096960 A1 | 05-05-2005 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 812404 P

- US 595702 A